(19) Europäisches Patentamt
European Patent Office
Office européen des brevets

(11) EP 2 091 990 B1

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: **07822432.6**

(22) Anmeldetag: **09.11.2007**

(51) Int Cl.:
***C08G 18/48*** *(2006.01)* ***C08G 18/44*** *(2006.01)*
***C08G 64/34*** *(2006.01)*

(86) Internationale Anmeldenummer:
**PCT/EP2007/062143**

(87) Internationale Veröffentlichungsnummer:
**WO 2008/058913 (22.05.2008 Gazette 2008/21)**

(54) **VERFAHREN ZUR HERSTELLUNG VON POLYURETHAN-WEICHSCHAUMSTOFFEN**

PROCESS FOR PRODUCING FLEXIBLE POLYURETHANE FOAMS

PROCÉDÉ DE FABRICATION DE MOUSSES SOUPLES EN POLYURÉTHANNE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **15.11.2006 EP 06124124**

(43) Veröffentlichungstag der Anmeldung:
**26.08.2009 Patentblatt 2009/35**

(73) Patentinhaber: **BASF SE**
**67056 Ludwigshafen (DE)**

(72) Erfinder:
- **MIJOLOVIC, Darijo**
  **68309 Mannheim (DE)**
- **BAUER, Stephan**
  **65239 Hochhelm (DE)**
- **GÖTTKE, Stephan**
  **69117 Heidelberg (DE)**

(56) Entgegenhaltungen:
**EP-A- 0 222 453**
**EP-A- 1 108 736**
**US-A- 4 634 743**
**US-A- 4 713 399**
**US-A1- 2003 149 232**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 091 990 B1

## Beschreibung

Gegenstand der Erfindung ist ein Verfahren zur Herstellung von Polyurethan-Weichschaumstoffen, die insbesondere eine verringerte Emission von organischen Stoffen und eine gute Flammkaschierbarkeit aufweisen sollen.

Polyurethan-Weichschaumstoffe werden in vielen technischen Gebieten, insbesondere zur Polsterung oder Geräuschdämmung, eingesetzt. Ihre Herstellung erfolgt üblicherweise durch Umsetzung von Polyisocyanaten mit Verbindungen mit mindestens zwei mit Isocyanatgruppen reaktiven Wasserstoffatomen in Gegenwart von Treibmitteln sowie gegebenenfalls Katalysatoren und üblichen Hilfs- und/oder Zusatzstoffen.

Die meisten Polyurethan-Schaumstoffe emittieren flüchtige organische Verbindungen. Dabei kann es sich beispielsweise um Katalysatoren, Abbauprodukte oder nicht umgesetzte flüchtige Einsatzstoffe handeln. Diese Emissionen werden für viele Einsatzgebiete der Polyurethan-Weichschaumstoffe, beispielsweise beim Einsatz in Kraftfahrzeuginnenräumen oder bei der Anwendung in Möbeln oder Matratzen, als Qualitätsmangel empfunden.

Der Markt verlangt daher zunehmend nach emissionsarmen Schaumstoffen. Insbesondere die Automobilindustrie fordert in den nächsten Jahren eine deutliche Reduktion von flüchtigen organischen (VOC) und kondensierbaren Verbindungen (Fogging oder FOG) in Schaumstoffen.

Es hat in der Vergangenheit nicht an Versuchen gefehlt, die Emissionsneigung der Pofyurethan-Weichschaumstoffe zu vermindern.

In der Automobilindustrie ist es für viele Einsatzgebiete nötig, Flammkaschierungen auf die Schaumstoffe aufzubringen. Für die Flammkaschierung werden insbesondere Polyester-Blockweichschaumstoffe, im besonderen auf Basis von Low-Fogging Polyesterolen, wie sie beispielsweise unter der Bezeichnung Lupraphen® 8149 von der BASF Aktiengesellschaft vertrieben werden, eingesetzt. Nachteil dieser Schaumstoffklasse ist, dass zum einem immer noch zyklische Verbindungen aus Diethylenglykol und Adipinsäure in den Emissionsmessungen gefunden werden und das die Alterungseigenschaften von Polyesterblockschaumstoffen nicht den Kundenanforderungen genügen.

Polyether-Blockschaumstoffe können unter Verwendung von Additiven ebenfalls zur Flammkaschierung verwendet werden. Ein solches Verfahren ist beispielsweise in EP 1 108 736 beschrieben. Die Vorteile von Polyetherolen gegenüber den Polyesterolen sind zwar die besseren Alterungseigenschaften, aber die Haftung zwischen Schaumstoff und Textil ist häufig ungenügend.

In Zukunft ist zu erwarten, dass im Automobilbau die Emissionsgrenzen insgesamt deutlich gesenkt werden und die Emission von Aminen nicht mehr akzeptiert wird, ohne dass es Abstriche an der Qualität der Polyurethane geben darf. Weiterhin ist bei Polyurethanen in Kraftfahrzeuginnenräumen das sogenannte Fogging zu minimieren. Darunter versteht man die Emission von Verbindungen, die anschließend im Fahrzeug-innenraum, beispielsweise an der Windschutzscheibe, kondensieren können. Auch das Fogging wird als Qualitätsmangel angesehen.

Die Emissionen werden gemäß VDA 278 gemessen. Gefordert werden vom Markt folgende Grenzwerte: 1. Flüchtigen Emissionen (VOC) maximal 100 ppm und 2. Kondensierbare Emissionen (FOG) von maximal 250 ppm

In EP 222 453 und US 2003/149232 wurden Polyethercarbonatpolyole beschieben, die durch Anlagerung von Kohlendioxid und Propylenoxid an H-funktionelle Startsubstanzen unter Verwendung von DMC-Katalysatoren hergestellt werden Diese Polyethercarbonatpolyole weisen jedoch hohe Gehalte an Propylencarbonat auf und die damit hergestellten Polyurethanschäume zeigen daher eine erhöhte Foggingneigung.

Die Aufgabe der Erfindung bestand darin, einen Polyurethan-Blockweichschaum mit akzeptablen Haftungseigenschaften bei der Flammkaschierung, guten Alterungseigenschaften und einem Minimum an Emissionen bereitzustellen.

Die Aufgabe konnte gelöst werden durch die Verwendung von Polyolen, hergestellt durch die Polyaddition von Alkylenoxiden und Kohlendioxid an H-funktionelle Startersubstanzen unter Verwendung von DMC-Katalysatoren, zur Herstellung der Polyure-than-Weichschaumstoffe.

Gegenstand der Erfindung ist dernzufolge ein Verfahren zur Herstellung von Polyurethan-Weichschaumstoffen durch Umsetzung von

a) Polyisocyanaten mit

b) Verbindungen mit mindestens zwei mit Isocyanatgruppen reaktiven Wasserstoffatomen, in Gegenwart von

c) Treibmitteln,

dadurch gekennzeichnet, dass die Komponente b) mindestens ein Polyethercarbonatpolyol bi), herstellbar durch Anlagerung von Kohlendioxid und Alkylenoxiden an H-funktionelle Startsubstanzen unter Verwendung von DMC-Katalysatoren, enthält, das eine Funktionalität von mindestens 2. eine Hydroxylzahl im Bereich von 10 bis 500 mgKOH/g und einen Gehalt von eingebautem Kohlendioxid in Form von Carbonateinheiten von mindestens 2 Gew.-% besitzt.

Dabei bezieht sich die der Gehalt an eingebautem Kohlendioxid auf den durch die Reaktion aufgebauten

Molekülteil des jeweiligen Polyethercarbonatpolyols bi) ohne die Startersubstanz. Zu den erfindungsgemäß eingesetzten Polyethercarbonatpolyolen bi) und ihrer Herstellung ist folgendes zu sagen:

Die Herstellung der Polyethercarbonatpolyole bi) erfolgt üblicherweise durch katalytische Anlagerung von Alkylenoxiden und Kohlendioxid an H-funktionelle Startsubstanzen.

Als Alkylenoxide können reine Alkylenoxide, Mischungen aus Alkylenoxiden oder Mischung von Oxiden technisch verfügbarer Raffinatströme verwendet werden. Allgemein können für das erfindungsgemäße Verfahren Alkylenoxide mit 2 bis 24 Kohlenstoffatomen eingesetzt werden. Beispielhaft sollen nachfolgende Verbindungen genannt werden: Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid. In einer besonderen Ausführungsform der Erfindung können als Alkylenoxide ein- oder mehrfach epoxidierte Fette und Öle als Mono-, Di- und Triglyceride oder epoxidierte Fettsäuren oder deren C1-C24-Ester eingesetzt werden. In einer weiteren besonderen Ausführungsform können als Alkylenoxide, Epichlorhydrin, Glycidol oder Derivate des Glycidols, wie beispielsweise Methylglycidylether, Ethylglycidylether, Allylglycidylether, verwendet werden. Insbesondere werden zur Herstellung von erfindungsgemäßen Polyethercarbonatpolyolen bi) als Alkylenoxide Ethylenoxid und/oder Propylenoxid, insbesondere Propylenoxid verwendet.

Die erfindungsgemäß eingesetzten Polyethercarbonatpolyole bi) haben, wie beschrieben, eine Funktionalität von mindestens 2, bevorzugt von 2 bis 8, besonders bevorzugt von 2 bis 4 und insbesondere von 2 bis 3 und eine Hydroxylzahl im Bereich von 10 bis 500 mgKOH/g.

Zur Herstellung der erfindungsgemäß verwendeten Polyethercarbonatpolyole bi) werden Alkylenoxide und Kohlendioxid an H-funktionelle Startersubstanzen angelagert. Als geeignete Startsubstanzen können alle Verbindungen mit für die Alkoxylierung aktiven H-Atomen eingesetzt werden. Für die Alkoxylierung aktive Gruppen mit aktiven H-Atomen sind -OH, -NH, -SH und $CO_2H$, bevorzugt sind -OH und -NH, insbesondere -OH. Als geeignete Startersubstanzen können beispielsweise mehrwertige Alkohole, mehrwertige Amine, mehrwertige Thiole, mehrwertige Aminoalkohole, mehrwertige Thioalkohole, Polyetherpolyole, Polyesterpolyole, Polyesteretherpolyole, Polycarbonatpolyole, Polyethylenimine, hyperverzweigte Polyglycerine, hyperverzweigte Polycarbonatpolyole, hyperverzweigte Polyesterpolyole, hyperverzweigte Polyurethanpolyole, PolyTHF®, Polyetheramine (sog. Jeffamine, BASF Produkte Polyetheramin D230, D400, D200, T403, T5000), Polytetrahydrofuranamine (BASF Produkt Polytetrahydrofuranamin 1700), Polyetherthiole und Polyacrylatole eingesetzt werden. In einer besonderen Ausführungsform können als Startersubstanzen Ricinusöl, das Mono- oder Diglycerid von Ricinolsäure oder Monoglyceride von Fettsäuren verwendet werden. Des weiteren können chemisch modifizierte Mono-, Di-, Triglyceride von Fettsäuren oder C1 - C24 Alkyl-Fettsäureester verwendet werden, bei denen chemisch im Mittel mindestens 2 OH Gruppen pro Molekül eingeführt wurden. Die chemischen Modifikationen zur Einführung von OH-Gruppen in Fette, Öle und deren Derivate sind dem Fachmann bekannt. Beispielhaft für chemische Modifikationen zur Einführung von OH-Gruppen an Mono-, Di-, Triglyceriden oder C1 - C24 Alkyl-Fettsäureestern seien die Ringöffnung von epoxidierten Fett- und Ölderivaten, wie sie in beispielsweise DE 27 11 002 beschrieben sind, oder die Hydroformylierung an Fett- und Ölderivaten, wie sie in WO 2004/096882 oder WO 2004/096883 beschrieben sind, oder andere Modifikationen, wie sie in WO 2004/020497, US 2003/143910 oder US 2003/191274 beschrieben sind, genannt. Beispielhaft seien hierzu Handelsprodukte erwähnt, wie Lupranol Balance® (Fa. BASF AG), Merginol® -Typen (Fa. Hobum Oleochemicals GmbH), Sovermol® -Typen (Fa. Cognis Deutschland GmbH & Co. KG) und Soyol™-Typen (Fa. USSC Co.). Als Startersubstanzen kommen alle genannten Verbindungen entweder als Einzelsubstanzen oder als Gemische aus mindestens 2 der genannten Verbindungen zum Einsatz.

Als Startersubstanzen geeignete mehrwertige Alkohole sind beispielweise: zweiwertige Alkohole, wie Ethylenglykol, Diethylenglykol, Propylenglykol, Dipropylenglykol, 1,3-Propandiol, 1,4-Butandiol, 1,5-Pentantandiol 1,6-Hexandiol; dreiwertige Alkohole: Trimethylolpropan, Glycerin, Rizinusöl; vierwertige Alkohole: Pentaerythrit; Polyalkohole: Sorbit, Hexit, Saccharose, Stärke, Stärkehydrolysate, Cellulose, Cellulosehydrolysate, hydroxyfunktionalisierte Fette und Öle, insbesondere Rizinusöl. Als Startersubstanzen für die erfindungsgemäße Herstellung von Polyethercarbonatpolyolen bi) kommen insbesondere Alkohole mit Funktionalitäten von 2 bis 8 entweder als Einzelsubstanz oder als Gemisch aus mindestens 2 der genannten Alkohole zum Einsatz. Bevorzugt werden zwei- und/oder dreifunktionelle Alkohole als Startersubstanzen eingesetzt. Bei Verwendung von hydroxyfunktionalisierten Fetten und Ölen, insbesondere Rizinusöl, als Startsubstanzen ist es möglich, eine größere Menge an Kohlendioxid in die Polyethercarbonatpolyol-Kette einzubauen.

Als Startersubstanzen geeignete mehrwertige Amine sind beispielweise: Ammoniak, Methylamin, Ethylamin, geradkettige oder verzweigte C3-C18-Monoamine, Ethylendiamin, Triethylentetramin, Tetraethylenpentamin, Propylendiamin, Polyethylenimine mit $M_w$ = 300 bis 5000 g/mol, Isomere des Toluoldiamins, Polyetheramine, wie Jeffamine, oder Isomere des Diaminodiphenylmethans. Bevorzugt werden Ethylendiamin und die Isomere des Toluoldiamins.

Die Startersubstanzen können auch aus der Substanzklasse der Polyetherpolyole ausgewählt sein, insbesondere solchen mit einem Molekulargewicht $M_n$ im Bereich von 62 bis 10000 g/mol. Als Polyetherpolyole werden mindestens 2-funktionelle, bevorzugt 2-bis 8-funktionelle, besonders bevorzugt 2- und 3-funktionelle Polyetherpolyole eingesetzt. Bevorzugt sind Polyetherpolyole, die aus sich wiederholenden Ethylenoxid- und Propylenoxideinheiten aufgebaut sind, bevorzugt mit einem Anteil an Einheiten von 35 bis 100 % Propylenoxid-, besonders bevorzugt mit einem Anteil von 50 bis 100 % Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Etylenoxideinheiten sind beispielsweise die Lupranol®-Marken der BASF AG. Weitere geeignete homo-Polyethylenoxide sind beispielsweise die Pluriol® E-Marken der BASF AG, geeignete homo-Polypropylenoxide sind beispielsweise die Pluriol® P-Marken der BASF AG, geeignete gemischte Copolymere aus Ethylenoxid und Propylenoxid sind beispielsweise die Pluriol® PE oder Pluriol® RPE-Marken der BASF AG.

Die Startersubstanzen können auch aus der Substanzklasse der Polyesterpolyole ausgewählt sein, insbesondere solchen mit einem Molekulargewicht $M_n$ im Bereich von 200 bis 10000 g/mol. Als Polyesterpolyole werden mindestens 2-funktionelle eingesetzt. Bevorzugt bestehen Polyesterpolyole aus alternierenden Säure- und Alkoholeinheiten. Als Säurekomponenten werden bevorzugt Bernsteinsäure, Adipinsäure, Phthalsäureanhydrid, Phthalsäure oder Gemische aus genannten Säuren und/oder Anhydriden eingesetzt. Als Alkoholkomponenten werden Ethandiol, 1,2-Propandiol, 1,3-Propandiol, 1-4-Butandiol, 1,5-Pentandiol, 1,6-Hexandiol, Diethylenglykol, Dipropylenglykol oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole bi) dienen können. Bevorzugt werden Polyetherpolyole mit $M_n$ = 150 bis 2000 g/mol zur Herstellung der Polyesteretherpolyole eingesetzt. Falls nicht anders angegeben, handelt es sich bei den Molekulargewichten der Polyole um das zahlenmittlere Molekulargewicht $M_n$.

Des weiteren können als Startersubstanzen Polycarbonate eingesetzt werden, insbesondere solchen mit einem Molekulargewicht $M_n$ im Bereich von 150 bis 10000 g/mol, die beispielsweise durch Umsetzung von Phosgen, Dimethylcarbonat, Diethylcarbonat oder Diphenylcarbonat und 2-funktionellen Alkoholen oder Polyesterpolyolen oder Polyetherpolyolen hergestellt werden. Beispiele zu Polycarbonaten finden sich beispielsweise in der Anmeldung EP 1 359 177.

Bevorzugt werden als H-funktionelle Startsubstanzen Diethylenglykol, Dipropylenglykol, Glyzerin, Trimethylolpropan, Pentaerythrit, Rizinusöl, Sorbit, Glyzerin und Polyetherpolyole, aufgebaut aus sich wiederholenden Polyalkylenoxideinheiten, eingesetzt. Besonders bevorzugt sind Diethylenglykol, Dipropylenglykol, Glyzerin, Trimethylolpropan, 2- bis 4-funktionelle Polyetherpolyole aufgebaut aus Propylenoxid oder aus Propylenoxid und Ethylenoxid. Die Polyetherpolyole haben bevorzugt ein Molekulargewicht $M_n$ im Bereich von 62 bis 10000 g/mol, eine Funktionalität von 2 bis 4, und eine Viskosität von 200 bis 10000 mPa·s und insbesondere ein Molekulargewicht $M_n$ im Bereich von 62 bis 5000 g/mol, eine Funktionalität von 2 bis 3, und eine Viskosität von 300 bis 2000 mPa·s. Die bevorzugten Startersubstanzen werden entweder als Einzelsubstanz oder als Gemisch aus mindestens 2 der genannten Substanzen eingesetzt.

Die Herstellung der Polyethercarbonatpolyole bi) erfolgt durch katalytische Anlagerung von Kohlendioxid und Alkylenoxiden an Startersubstanzen mit für die Alkoxylierung aktiven H-Atomen. Als Katalysatoren werden Multimetallcyanidverbindungen, auch als DMC Katalysatoren bezeichnet, eingesetzt. Als Alkylenoxide werden, wie beschrieben, bevorzugt Ethylenoxid und Propylenoxid als Einzelsubstanzen oder als Gemisch eingesetzt. Vorzugsweise enthalten die Polyethercarbonatpolyole bi) 2 bis 25 Gew.-% Kohlendioxid in Form von Carbonateinheiten, 0 bis 40 Gew.-% Ethylenoxid und 35 bis 98 Gew.-% Propylenoxid. Dabei beziehen sich die jeweiligen Angaben auf den durch die Reaktion aufgebauten Molekülteil des jeweiligen Polyethercarbonatpolyols bi) ohne die Startersubstanz. Ganz besonders bevorzugt wird als Alkylenoxid ausschließlich Propylenoxid verwendet. Die hergestellten Polyethercarbonatpolyole bi) enthalten dann ganz besonders bevorzugt 2 bis 25 Gew.-% Kohlendioxid in Form von Carbonateinheiten und 75 bis 98 Gew.-% Propylenoxid, bezogen auf den durch die Reaktion aufgebauten Motekülteil des jeweiligen Polyethercarbonatpolyols bi) ohne die Startersubstanz.

Die erfindungsgemäß beschriebenen Polyethercarbonatpolyole bi) besitzen vorzugsweise eine Struktur, die sich mit der allgemeinen Formel (I) beschreiben lässt.

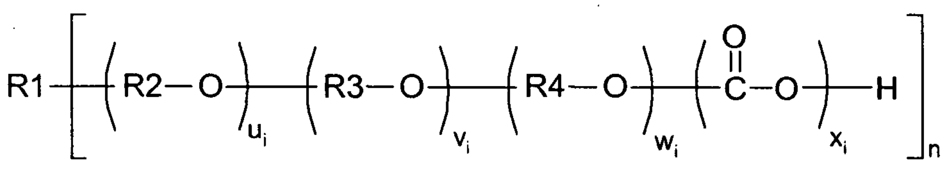

(I)

mit

R1 Startersubstanz-Rest ohne die für die Alkoxylierung aktiven H-Atome, wie bei- spielsweise Molekülreste von

mehrwertigen Alkoholen, mehrwertigen Aminen, mehrwertigen Thiolen, mehrwertigen Aminoalkoholen, mehrwertigen Thioalkoho- len, Polyetherolen, Polyesterolen, Polyesteretherolen, Polycarbonaten, Polyethy- leniminen, hypverzweigten Polyglycerinen, hyperverzweigten Polycarbonatpoly- olen, hyperverzweigten Polyesterolen, hyperverzweigten Polyurethanpolyolen, PolyTHF®, Polyetheraminen (sog. Jeffamine, BASF Produkte Polyetheramin D230, D400, D200, T403, T5000), Polytetrahydrofuranaminen (BASF Produkt Polytetrahydrofuranamin 1700), Polyetherthiolen, Polyacrylatolen. Des weiteren dem Molekülrest von Ricinusöl, Mono- oder Diglyceriden von Ricinusöl, Monogly- ceriden von Fettsäuren, Mono-, Di-, Triglyceriden oder C1 - C24 Alkyl-Fettsäure- estern mit mindestens 2 O-Atomen von Hydroxylgruppen, deren Hydroxylgrup- pen-Gruppen durch dem Fachmann bekannte chemische Modifikation zuvor ein- geführt wurden.

R2 $CH_2$-$CH_2$

R3 $CH_2$-$CH(CH_3)$

R4 $CH_2$-CH(R5), CH(R6)-CH(R6), $CH_2$-$C(R6)_2$, $C(R6)_2$-$C(R6)_2$,

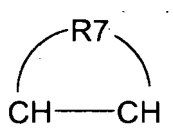

$CH_2$-CH-$CH_2$-R8, $C_6H_6$-CH-$CH_2$, $C_6H_6$-$C(CH_3)$-$CH_2$, Molekülrest von ein- oder mehrfach epoxidierten Fetten oder Ölen als Mono-, Di- und Triglyceride, Molekülrest von ein- oder mehrfach epoxdierten Fettsäuren oder deren C1-C24-Alkylestern

R5 $C_2$ bis $C_{24}$ -Alkylrest, Alkenrest, der linear oder verzweigt sein kann

R6 $C_1$ bis $C_{24}$ -Alkylrest, Alkenrest, der linear oder verzweigt sein kann

R7 $C_3$ bis $C_6$ Alkylrest, der linear angeordnet ist

R8 OH, Cl, $OCH_3$, $OCH_2$-$CH_3$, O-$CH_2$-CH=$CH_2$, O-CH=$CH_2$

Dem Fachmann ist bekannt, dass durch Reaktion von Alkylenoxiden, die eine weitere für die Alkoxylierung reaktive Gruppe besitzen, Verzweigungspunkte innerhalb der Polymerkette bewirken können. So kann bei Einsatz von Glycidol als Alkylenoxid die OH-Gruppe des Glycidols eine weitere Polymerkette erzeugen, an der sich AlkylenoxidEinheiten anlagern können. Ähnliches gilt bei Einsatz von mehrfach epoxidierten Fett- oder Ölderivaten.
Des weiteren gilt

$u_i$, $v_i$, $w_i$ ganze Zahlen von 0 - 400; mit mindestens einem der Indizes $u_i$, $v_i$ oder $w_i \geq 1$;

$X_i$ ganze Zahl von 1 bis 100; wobei zusätzlich gilt, dass in der allgemeinen Formel (I) für Polyethercarbonatpolyole bi) weder eine -C(=O)-O-C(=O)-O- Bindungen (Carbonat-Carbonat Bindung) noch eine -C(=O)-OH Bindung am Kettenende auftritt.

n ganze Zahl von 2 bis 100, bevorzugt von 2 bis 8, besonders bevorzugt 2 bis 4, insbesondere 2 und 3.

i ganze Zahl mit i = 1 bis n

Weiter gelten für die allgemeine Formel (I) vorzugsweise die folgenden Beziehungen

$$\frac{1}{n} * \sum_{i=1}^{n} \frac{x_i}{u_i + v_i + w_i + x_i} = 0{,}02 \text{ bis } 0{,}25$$

$$\frac{1}{n} * \sum_{i=1}^{n} \frac{u_i}{u_i + v_i + w_i + x_i} = 0 \text{ bis } 0{,}4$$

$$\frac{1}{n} * \sum_{i=1}^{n} \frac{v_i}{u_i + v_i + w_i + x_i} = 0 \text{ bis } 0{,}98$$

$$\frac{1}{n} * \sum_{i=1}^{n} \frac{w_i}{u_i + v_i + w_i + x_i} = 0 \text{ bis } 0{,}4$$

Die Reihenfolge der Monomerbausteine in den einzelnen Polymerketten 1 bis n ist beliebig, wobei jedoch weder -C(=O)-O-C(=O)-O- Bindungen (Carbonat-Carbonat Bindung) innerhalb der Polymerketten, noch -C(=O)-OH Bindungen am Kettenende einzelner Polymerketten auftreten. Zusätzlich gilt, dass die n-Polymerketten des Polyethercarbonatpolyols bi) voneinander unabhängig zusammengesetzt sein können. Weiterhin kann gelten, dass während der Anlagerung nicht alle oder nur eine der n-Polymerketten mittels Alkoxylierung wächst.

Werden Gemische von Startersubstanzen eingesetzt, so können unterschiedliche Strukturen von Polyethercarbonatpolyolen bi) der allgemeinen Formel (I) nebeneinander vorliegen.

Gilt in der allgemeinen Formel (I) $u,v,w \neq 0$, oder $u,v \neq 0$ und gleichzeitig $w = 0$, so können die einzelnen Bausteine (R2-O), (R3-O) und (R4-O) oder (R2-O) und (R3-O) unabhängig von (C(=O)-O)-Einheiten entweder in Form von Blöcken, streng alternierend, statistisch oder in Form von Gradienten aneinander gebunden sein.

Bevorzugt sind Polyethercarbonatpolyole bi), aufgebaut aus Startersubstanzen, Ethylenoxid, Propylenoxid und $CO_2$. Diese lassen sich durch die allgemeine Formel (II) beschreiben.

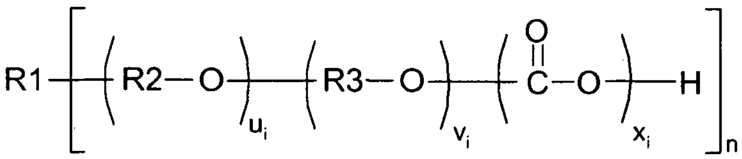

(II)

Wobei R1, R2 und R3 die gleiche Bedeutung wie in Formel (I) haben.

Des weiteren gilt

$u_i$, $v_i$ ganze Zahlen von 0 - 400; mit mindestens $u_i$, oder $v_i \geq 1$;

$x_i$ ganze Zahl von 1 bis 100; wobei zusätzlich gilt, dass in der allgemeinen Formel (II) für Polyethercarbonatpolyole bi) weder eine -C(=O)-O-C(=O)-O- Bindungen (Carbonat-Carbonat Bindung) noch eine -C(=O)-OH Bindung am Kettenende auftritt.

n ganze Zahl von 2 bis 100, bevorzugt von 2 bis 8, besonders bevorzugt 2 bis 4, insbesondere 2 und 3.

i ganze Zahl mit i = 1 bis n

Weiter gelten für die allgemeine Formel (II) vorzugsweise die folgenden Beziehungen

$$\frac{1}{n} * \sum_{i=1}^{n} \frac{x_i}{u_i + v_i + x_i} = 0{,}02 \text{ bis } 0{,}25$$

$$\frac{1}{n} * \sum_{i=1}^{n} \frac{u_i}{u_i + v_i + x_i} = 0 \text{ bis } 0{,}4$$

$$\frac{1}{n} * \sum_{i=1}^{n} \frac{v_i}{u_i + v_i + x_i} = 0{,}35 \text{ bis } 0{,}98$$

Die Reihenfolge der Monomerbausteine in den einzelnen Polymerketten 1 bis n ist beliebig, wobei jedoch weder -C(=O)-O-C(=O)-O- Bindungen (Carbonat-Carbonat Bindung) innerhalb der Polymerketten, noch -C(=O)-OH Bindungen am Kettenende einzelner Polymerketten auftreten. Zusätzlich gilt, dass die n-Polymerketten des Polyethercarbonatpolyols bi) voneinander unabhängig zusammengesetzt sein können. Weiterhin kann gelten, dass während der Anlagerung nicht alle oder nur eine der n-Polymerketten mittels Alkoxylierung wächst.

Werden Gemische von Startersubstanzen eingesetzt, so können nebeneinander unterschiedliche Strukturen von Polyethercarbonatpolyolen bi) der allgemeinen Formel (II) nebeneinander vorliegen.

Gilt in der allgemeinen Formel (II) $u_i, v_i \neq 0$, so können die einzelnen Bausteine (R2-O) und (R3-O) unabhängig von (C(=O)-O)-Einheiten entweder in Form von Blöcken, streng alternierend, statistisch oder in Form von Gradienten aneinander gebunden sein.

Besonders bevorzugt sind Polyethercarbonatpolyole bi), aufgebaut aus Startersubstanzen, Propylenoxid und $CO_2$. Diese lassen sich durch die allgemeine Formel (III) beschreiben.

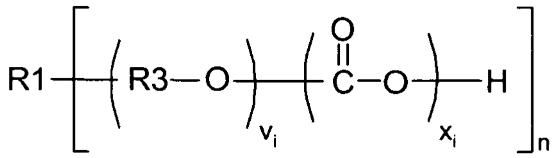

**(III)**

R1 und R3 haben die gleiche Bedeutung wie in Formel (I).

Des weiteren gilt

$v_i$ ganze Zahl von 4 - 400

$x_i$ ganze Zahl von 1 bis 100; wobei zusätzlich gilt, dass in der allgemeinen Formel (III) für Polyethercarbonatpolyole bi) weder eine -C(=O)-O-C(=O)-O- Bindungen (Carbonat-Carbonat Bindung) noch eine -C(=O)-OH Bindung am Kettenende auftritt.

n ganze Zahl von 2 bis 100, bevorzugt von 2 bis 8, besonders bevorzugt 2 bis 4, insbesondere 2 und 3.

i ganze Zahl mit i = 1 bis n

Weiter gelten für die allgemeine Formel (III) vorzugsweise die folgenden Beziehungen

$$\frac{1}{n} * \sum_{i=1}^{n} \frac{x_i}{v_i + x_i} = 0{,}02 \text{ bis } 0{,}25$$

$$\frac{1}{n} * \sum_{i=1}^{n} \frac{v_i}{v_i + x_i} = 0{,}75 \text{ bis } 0{,}98$$

Die Reihenfolge der Monomerbausteine in den einzelnen Polymerketten 1 bis n ist beliebig, wobei jedoch weder-C(=O)-O-C(=O)-O- Bindungen (Carbonat-Carbonat Bindung) innerhalb der Polymerketten, noch -C(=O)-OH Bindungen am Kettenende einzelner Polymerketten auftreten. Zusätzlich gilt, dass die n-Polymerketten des Polyethercarbonatpolyols bi) voneinander unabhängig zusammengesetzt sein können. Weiterhin kann gelten, dass während der Anlagerung nicht alle oder nur eine der n-Polymerketten mittels Alkoxylierung wächst.

Werden Gemische von Startersubstanzen eingesetzt, so können nebeneinander unterschiedliche Strukturen von Polyethercarbonatpolyolen bi) der allgemeinen Formel (III) nebeneinander vorliegen.

Die Herstellung von Polyethercarbonatpolyolen bi) durch Polymerisation von Kohlendioxid und Alkylenoxiden in Gegenwart von Multimetallcyanidkatalysatoren ist bekannt.

Im folgenden wird ein besonders bevorzugtes Verfahren zur Herstellung der Polyethercarbonatpolyole beschrieben.

Die Herstellung der Polyethercarbonatpolyole bi) der allgemeinen Formeln (I), (II) oder (III) erfolgt, wie beschrieben, durch katalytische Anlagerung von Alkylenoxiden und Kohlendioxid an H-funktionelle Startersubstanzen. Zur Umsetzung wird die Startersubstanz oder ein Gemisch aus mindestens zwei Startersubstanzen vorgelegt und, so weit notwendig, Wasser und/oder andere leicht flüchtige Verbindungen entfernt. Dies erfolgt beispielsweise mittels Strippen mit Stickstoff unter vermindertem Druck oder durch Destillation unter Vakuum bei Temperaturen von 50 - 200 °C, bevorzugt 80-160 °C, besonders bevorzugt bei 100-130 °C. Bevorzugt ist bei dem hier beschriebenen erfindungsgemäßen Verfahren die Destillation unter Vakuum bei Temperaturen von 100 - 130°C. Diese Vorbehandlung der Startersubstanz oder dem Gemisch der Startersubstanzen wird im folgenden vereinfacht als Trocknung bezeichnet.

Dabei kann der Katalysator bereits in der Startersubstanz oder dem Gemisch von mindestens zwei Startersubstanzen vorgelegt sein, es ist jedoch auch möglich, den Katalysator erst nach der Trocknung der Startersubstanz oder dem Gemisch der Startersubstanzen zuzusetzen. Der Katalysator kann in fester Form oder als konzentrierte Suspension in einer Startersubstanz zugegeben werden. Bevorzugt wird der Katalysator als Suspension in einer Startersubstanz, besonders bevorzugt in der gleichen Startersubstanz oder Startersubstanzmischung, wie der zuvor vorgelegten, zugegeben. Wird der Katalysator als Suspension zugegeben, wird diese bevorzugt vor der Trocknung der Startersubstanz(en) zugefügt. Typische Konzentrationen der Katalysatorsuspension liegen zwischen 2-50 Gew.%, bevorzugt 2-25 Gew.% und besonders bevorzugt 2 -10 Gew.%.

Vor der Dosierung der Alkylenoxide und des Kohlendioxids kann der Reaktor mit einem Schutzgas wie zum Beispiel Stickstoff inertisiert werden oder man evakuiert den Reaktor. Bevorzugt wird der Reaktor vor der Dosierung der Alkylenoxide und des Kohlendioxids durch mehrmaliges, wechselweises Anlegen von Vakuum und anschließendes Spülen mit Stickstoff inertisiert, um unerwünschte Reaktionen der Alkylenoxide mit Sauerstoff zu vermeiden.

Dem Fachmann ist bekannt, dass für die Berechnung der einzusetzenden Mengen an Alkylenoxiden und des Kohlendioxids entsprechende Kennzahlen der Startersubstanzen und des Polyethercarbonatpolyols bi), verwendet werden. Wird beispielsweise ein mehrfunktioneller Alkohol eingesetzt, so dient dessen Hydroxylzahl und die angestrebte Hydroxylzahl des damit zu synthetisierenden Polyethercarbonatpolyols bi) als Grundlage zur Berechnung der Mengen an Alkylenoxiden und des Kohlendioxids. Werden Amine als Startersubstanzen eingesetzt, so dienen die Aminzahlen als Grundlage, bei Säuren die entsprechenden Säurezahlen. Für die Bestimmung einer Hydroxyl-, Amin- oder Säurezahl ist es notwendig, die Funktionalität des gemessenen Stoffes zu kennen. Weiterhin ist hinlänglich bekannt, dass die Funktionalität der eingesetzten Startersubstanz oder das Gemisch mehrerer Startersubstanzen die Funktionalität des damit mittels Alkoxylierung hergestellten Polyols bestimmt. Gleiches gilt hier für die erfindungsgemäßen Polyethercarbonatpolyole bi). Eine trifunktionelle Startersubstanz, wie beispielsweise Glycerin, erzeugt demnach ein trifunktionelles Polyethercarbonatpolyol bi). Es ist weiterhin bekannt, dass Verunreinigungen, wie zum Beispiel Wasser, die Funktionalität beeinflussen können.

Für das bevorzugte Verfahren ist es essentiell, die Menge an nicht abreagierten Alkylenoxiden in der flüssigen Phase während der gesamten Dosierzeit zu kontrollieren. Diese Menge wird im folgenden als Konzentration an freiem Alkylenoxid bezeichnet. Eine Messung der freien Alkylenoxid Konzentration kann beispielsweise mittels ATR-FTIR-Sonde, einer Dichtemessung, GC, GC/MS, HPLC oder sonstiger direkter oder indirekter Methoden erfolgen. Als günstige Konzentrationsbereiche der freien Alkylenoxide haben sich 0-40 Gew.%, besonders 0-25 Gew.%, insbesondere 0-15 Gew.% und ganz besonders 0-10 Gew.% herausgestellt.

Die Dosierung eines oder mehrerer Alkylenoxide und des Kohlendioxids erfolgt nach der optionalen Trocknung einer Startersubstanz oder der Mischung mehrerer Startersubstanzen und der Zugabe des Multimetallcyanidkatalysators, der vor oder nach der Trocknung als Feststoff oder in Form einer Suspension zugegeben wird. Die Dosierung eines

oder mehrerer Alkylenoxide und des Kohlendioxids kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases wie beispielsweise Stickstoff eingestellt, wobei der Druck zwischen 10 mbar - 5 bar, vorzugsweise 100 mbar - 3 bar und bevorzugt 500 mbar - 2 bar eingestellt wird.

Prinzipiell kann die Dosierung eines oder mehrerer Alkylenoxide und des Kohlendioxids simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung ein oder mehrerer Alkylenoxide erfolgt simultan oder sequentiell zur Kohlendioxid Dosierung. Werden mehrere Alkylenoxide zur Synthese der Polyethercaibonatpolyole bi) eingesetzt, so kann deren Dosierung simultan oder sequentiell über jeweils separate Dosierungen erfolgen oder über eine oder mehrere Dosierungen, wobei mindestens zwei Alkylenoxide als Gemisch dosiert werden. Über die Art der Dosierung der Alkylenoxide und des Kohlendioxids ist es möglich, statistische, alternierende, blockartige oder gradientenartige Polyethercarbonatpolyole bi) zu synthetisieren. Für das erfindungsgemäße Verfahren ist es wichtig, dass die Konzentration eines oder mehrerer freier Alkylenoxide während der gesamten Dosierzeit zwischen 0-40 Gew.%, besonders 0-25 Gew.%, insbesondere 0-15 Gew.% und ganz besonders 0-10 Gew.%, bezogen auf die Masse der flüssigen Phase, beträgt.

Die für die Synthese der Polyethercarbonatpolyole bi) zu verwendende Menge an Kohlendioxid berechnet sich aus den oben beschriebenen Kennzahlen der eingesetzten Startersubstanzen, der Hydroxylzahl des Produktes und der gewünschten Einbaurate an Kohlendioxid im Polyethercarbonatpolyol bi). Die eingesetzte Menge Kohlendioxid kann von der berechneten Menge abweichen. Vorzugsweise wird ein Überschuss an Kohlendioxid eingesetzt, insbesondere wird die Menge an Kohlendioxid über den Gesamtdruck bei Reaktionsbedingungen bestimmt. Bedingt durch die Reaktionsträgheit von Kohlendioxid ist ein Überschuss von Kohlendioxid von Vorteil. Für das erfindungsgemäße Verfahren hat sich weiterhin gezeigt, dass die Reaktion bei 60-150 °C, bevorzugt bei 70-140 °C besonders bevorzugt bei 80-130 °C und Drucken von 0-20 bar, bevorzugt 1-15 bar und besonders bevorzugt von 3-10 bar gewünschte Polyethercarbonatpolyole bi) erzeugt. Werden Temperaturen unterhalb von 60 °C eingestellt, kommt die Reaktion zum erliegen. Bei Temperaturen oberhalb von 150 °C steigt die Menge an unerwünschten Nebenprodukten stark an.

Nachdem die Startersubstanz oder ein Gemisch von mehreren Startersubstanzen zusammen mit dem Multimetallcyanidkatalysator getrocknet und inertisiert wurden, kann entweder aus dem Vakuum oder mit einem eingestellten Vordruck, bevorzugt aus dem Vakuum ein oder mehrere Alkylenoxide und Kohlendioxid dosiert werden. Die Zugabe von Kohlendioxid kann vor, nach oder gleichzeitig mit der Alkylenoxid Zugabe erfolgen. Dabei kann eine berechnete Kohlendioxidmenge, ein Überschuss der berechneten Kohlendioxidmenge oder soviel Kohlendioxid zugegeben werden, dass sich ein bestimmter Reaktordruck einstellt. Bevorzugt erfolgt die Dosierung des Kohlendioxids nach dem Start der Dosierung einer oder mehrerer Alkylenoxide. In einer besonderen Ausführungsform der Erfindung wird zunächst ein Teil der Gesamtmenge ein oder mehrerer Alkylenoxide zur Mischung einer oder mehrerer Startersubstanzen und dem Katalysator zugegeben, um das System zu aktivieren. Erst danach wird dem Reaktionsgemisch Kohlendioxid zugeführt. Die Teilmenge kann zwischen 0,1-20 %, bevorzugt 0,5 - 10 % und besonders bevorzugt 1 - 5 % bezogen auf die Gesamtmenge der zu dosierenden Alkylenoxide ausmachen.

Wird mehr als ein Alkylenoxid zur Synthese der Polyethercarbonatpolyole bi) verwendet, können die Alkylenoxide entweder separat oder als Mischungen dosiert werden. Dem Fachmann ist verständlich, dass zum Aufbau von blockartigen Strukturen separate Dosierungen notwendig sind. Statistische Strukturen können durch separate Dosierungen einzelner Alkylenoxide oder durch Dosierung von Mischungen von Alkylenoxiden realisiert werden. Weiterhin können Kombinationen unterschiedlicher Strukturtypen in einem Polyethercarbonatpolyol bi) durch die Art, als separate Dosierung oder als Dosierung von Mischungen, und zeitliche Abfolge der Dosierungen, beeinflusst werden. Weiterhin ist es bei der Synthese von Polyethercarbonatpolyolen bi) möglich, den Einbau von Kohlendioxid danach zu steuern, wann und bei welchem Reaktordruck Kohlendioxid im System zugegen ist. Zum Beispiel ist es möglich, während einer Reaktion alle Dosierungen zwischenzeitlich zu stoppen, die im Reaktor befindlichen Mengen an Alkylenoxiden und Kohlendioxid abreagieren zu lassen oder mittels Anlegen von Vakuum zu entfernen, um dann entweder nur mit einem, mehreren oder Gemischen aus mehreren Alkylenoxiden fortzufahren, ohne weiteres Kohlendioxid zuzuführen. Beispielsweise kann als Startersubstanz ein Polypropylenglykol mit Mn = 600 g/mol verwendet werden, das zunächst mit Propylenoxid und Kohlendioxid unter Katalyse zur Reaktion gebracht wird. Nach einer bestimmten Menge an Propylenoxid und Kohlendioxid wird die Zufuhr des Kohlendioxids gestoppt, das System kurz evakuiert und anschließend nur noch Propylenoxid zudosiert. Somit erhält man ein Polyethercarbonatpolyol bi), das im Mittelteil des Moleküls einen reinen Polypropylenblock enthält, nachfolgend an beiden Seiten des Moleküls jeweils eine Kette aufgebaut aus statistisch verteilten Propylenglykol- und Carbonateinheiten enthält und als Endblöcke wieder reine Propylenglykoleinheiten aufweist.

Wie beschrieben, haben die Polyethercarbonatpolyole bi) am Kettenende einen Block aus reinen Alkylenoxideinheiten, insbesondere aus reinen Propylenoxideinheiten.

Vorzugsweise wird die Startersubstanz oder ein Gemisch aus mehreren Startersubstanzen zusammen mit dem Katalysator getrocknet, inertisiert und danach der Reaktor evakuiert. Danach wird eine Teilmenge eines oder

mehrerer Alkylenoxide zur Aktivierung des Systems dosiert. Die Teilmenge kann zwischen 0,1 - 20 %, bevorzugt 0,5 -10 % und besonders bevorzugt 1 - 5 % bezogen auf die Gesamtmenge der zu dosierenden Alkylenoxide ausmachen. Die dosierte Teilmenge zur Aktivierung kann entweder nur aus einem Alkylenoxid, aus mehreren separat dosierten Alkylenoxiden oder aus einer Mischung aus mindestens zwei Alkylenoxiden bestehen. Bevorzugt besteht die Teilmenge aus einem Alkylenoxid oder aus einer Mischung aus mindestens zwei Alkylenoxiden, besonders bevorzugt aus einem Alkylenoxid und insbesondere aus Propylenoxid. Die Aktivierung des Systems ist an einer exothermen Reaktion und/ oder einem Druckabfall im Reaktor zu beobachten.

Nach der Aktivierung des Siarter-Katalysator-Systems wird Kohlendioxid zugeführt, wobei die gesamte einzusetzende Menge auf einmal oder geregelt über eine eingestellte Durchflussmenge zugegeben werden kann. In einer weiteren Ausführungsform wird das Kohlendioxid über ein Regelventil und einem eingestellten Druck dosiert. Fällt der Reaktordruck unter einen eingestellten Regeldruck, so wird so lange Kohlendioxid dosiert, bis der Regeldruck wieder erreicht wird. Die gesamte eingesetzte Menge an Kohlendioxid ist vorzugsweise größer als die über die gewünschte Einbaurate von Kohlendioxid im Polyethercarbonatpolyol bi) berechnete Menge. Bevorzugt wird Kohlendioxid über eine eingestellte Durchflussmenge oder einen eingestellten Druck dosiert, besonders bevorzugt über einen eingestellten Druck dosiert. Dem Fachmann ist verständlich, dass abhängig vom Reaktorvolumen, der Füllhöhe des Reaktors, den Eigenschaften der flüssigen Phase, der Zusammensetzung der Gasphase und weiteren Parametern bei einem voreingestelltem Druck und einer eingestellten Temperatur eine bestimmte Menge an Kohlendioxid im Reaktor ergibt. Das bedeutet, das während der Reaktion die verfügbaren Mengen von Kohlendioxid bei konstantem Druck und konstanter Temperatur dennoch unterschiedlich sind, da sich die sonstigen Parameter während der Reaktion ändern.

Für das bevorzugte Verfahren hat sich gezeigt, dass die Reaktion bei 60-150 °C, bevorzugt bei 70 -140 °C besonders bevorzugt bei 80 -130 °C und Drucken von 0-20 bar, bevorzugt 1 - 15 bar und besonders bevorzugt von 3-10 bar gewünschte Polyethercarbonatpolyole bi) erzeugt. Dabei können sowohl die Temperatur als auch der Druck während der Reaktion in den angegebenen Grenzen konstant bleiben oder variieren. Es können Temperatur- und/oder Druckprofile realisiert werden, wobei stufenweise oder kontinuierlich Temperatur und/oder Druck während der Reaktion gesenkt oder erhöht werden. Ebenfalls können während der Reaktion ein oder mehrere Dosierungen von einem oder mehreren Alkylenoxiden und Kohlendioxid variiert werden, wobei Dosierungen eingeschaltet, abgeschaltet oder Dosierraten erhöht oder erniedrigt werden. Dies ist insbesondere von Wichtigkeit, als dass überraschenderweise gefunden wurde, dass die erfindungsgemäßen Polyethercarbonatpolyole bi), mit einem Gehalt von eingebauten Kohlendioxid in Form von Carbonateinheiten, bezogen auf den durch die Reaktion aufgebauten Molekülteil ohne die Startersubstanz, von 2-25 Gew.-%, vorzugsweise 3-20 Gew.-% und besonders bevorzugt von 5-15 Gew.-% mit einem besonders niedrigen Gehalt an Nebenprodukten in Form von zyklischen Carbonaten synthetisiert werden können, in dem während der Reaktion auf den Gehalt der freien Alkylenoxide geachtet wird. Das bedeutet, dass bei der Synthese darauf zu achten ist, dass die angegebenen oberen Grenzen an freien Alkylenoxiden nicht überschritten werden. Überraschenderweise hat sich gezeigt, dass zu hohe freie Alkylenoxid Konzentrationen höhere Anteile an unerwünschten Nebenprodukten erzeugen. Während der Dosierzeit kann dies bedeuten, dass Zuläufe von Alkylenoxiden zwischenzeitlich heruntergeregelt oder ganz abgeschaltet werden, oder die Reaktortemperatur erhöht werden muss, um eine weitere Akkumulation von Alkylenoxiden zu vermeiden. Auch durch den Einbau eines Blocks aus reinen Alkylenoxideinhelten am Kettenende kann die Bildung von cyclischen Nebenprodukten vermindert werden.

Falls es bei der Herstellung der Polyethercarbonatpolyole bi) zur Bildung von zyklischen Nebenprodukten kommt, müssen diese vor der Verarbeitung zum Polyurethanschaum entfernt werden. Dies kann beispielsweise durch Destillation erfolgen.

Die Regelung der Kohlendioxid Dosierung während der Reaktion bewirkt, dass die Reaktion besser gesteuert wird und die Reaktion nicht einschläft. Dabei gilt, dass eine größere Menge Kohlendioxid einen höheren Druck und eine langsamere Reaktion bewirkt, eine kleinere Menge Kohlendioxid einen niedrigen Druck und eine schnellere Reaktion bewirkt.

Die für die Herstellung der Polyethercarbonatpolyole bi) eingesetzten Multimetallcyanidkatalysatoren haben vorzugsweise die allgemeine Formel (IV)

$$M^1_a[M^2(CN)_b(A)_c]\ fM^1gX_n \cdot h(H2O)\ eL \qquad (IV)$$

wobei

$M^1$ ein Metallion, ausgewählt aus der Gruppe, enthaltend Zn2+, Fe2+, Co3+, Ni2+, Mn2+, Co2+, Sn2+, Pb2+, Mo4+, Mo6+, Al3+, V4+, V5+, Sr2+, W4+, W6+, Cr2+, Cr3+, Cd2+,

$M^2$ ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+

bedeuten und $M^1$ und $M^2$ gleich oder verschieden sind,

A ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,

X ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,

L ein mit Wasser mischbarer Ligand, ausgewählt aus der Gruppe, enthaltend Alko- hole, Aldehyde, Ketone, Ether, Polyether Ester, Harnstoffe, Amide, Nitrile, und Sulfide,
bedeuten, sowie a, b, c, d, g und n so ausgewählt sind, dass die Elektroneutralität der Verbindung gewährleistet ist, und

e die Koordinationszahl des Liganden,

f eine gebrochene oder ganze Zahl größer oder gleich 0

h eine gebrochene oder ganze Zahl größer oder gleich 0 bedeuten.

Die Herstellung dieser Verbindungen erfolgt nach allgemein bekannten Verfahren, indem man die wässrige Lösung eines wasserlöslichen Metallsalzes mit der wässrigen Lösung einer Hexacyanometallatverbindung, insbesondere eines Salzes oder einer Säure, vereinigt und dazu während oder nach der Vereinigung einen wasserlöslichen Liganden gibt. Zur Herstellung des erfindungsgemäßen Polyetheralkohols werden vorzugsweise solche Multimetallcyanidkatalysatoren eingesetzt, bei denen als Hexacyanometallatverbindung die entsprechende Säure eingesetzt wurde.
Der Katalysator wird zumeist in einer Menge von kleiner 1 Gew.-%, vorzugsweise in einer Menge von kleiner 0,5 Gew.-%, besonders bevorzugt in einer Menge von kleiner 500 ppm und insbesondere in einer Menge von kleiner 100 ppm, jeweils bezogen auf das Gewicht des Polyethercarbonatpolyols bi), eingesetzt.
In einer bevorzugten Ausführungsform werden die Polyethercarbonatpolyole bi) nach ihrer Herstellung mit Stabilisatoren gegen thermooxidativen Abbau versetzt.
Besonders bevorzugt werden aminfreie Stabilisatoren gegen thermooxidativen Abbau verwendet, vorzugsweise ausgewählt aus der Gruppe, enthaltend

i) sterisch gehinderte Phenole,
ii) Lactone, insbesondere Benzofuran-2-on-derivate
iii) weitere aminfreie Antioxidantien, die kein Phenol abspalten, wie beispielsweise sterisch gehinderte Phosphite,

sowie beliebige Gemische dieser Verbindungen untereinander.
Beispiele für sterisch gehinderte Phenole i) sind Octadecyl-3-(3,5-di-t-butyl-4-hydroxy-phenylpropionat) (Irganox® 1076 der Firma CIBA), 3,5-Bis-(1,1-dimethylethyl-4-hydroxy-C7-C9-alkylverzweigte Ester (Irganox® 1135 der Firma CIBA), Ethylen(bisoxyethylen)bis-(3-(5-t-butylhydroxy-4-tolyl)-propionat) (Irganox® 245 der Firma CIBA).
Beispiele für Lactone ii), insbesondere Benzofuran-2-on-derivate sind beschrieben in EP 1 291 384 und DE 196 18 786.
Beispiele für die aminfreien Antioxidantien, die kein Phenol abspalten iii) sind beispielsweise beschrieben im Patent EP 905 180, wie zum Beispiel Tris(2,4-di-t-butylphenyl)phosphit.
Wie ausgeführt, werden die Polyethercarbonatpolyole bi) mit Polyisocyanaten zu Polyurethan-Schaumstoffen, insbesondere zu Polyurethan-Weichschaumstoffen, umgesetzt. Dabei können die erfindungsgemäßen Polyethercarbonatpolyole bi) einzeln, als Gemisch aus mindestens zwei erfindungsgemäßen Polyethercarbonatpolyolen bi) oder im Gemisch mit anderen Verbindungen mit mindestens zwei aktiven Wasserstoffatomen eingesetzt werden. Bevorzugt werden die erfindungsgemäßen Polyethercarbonatpolyole bi) zu 10 bis 100, insbesondere zu 50 bis 100 und ganz bevorzugt von 80 bis 100 Gew.-% in der Komponente b) eingesetzt.
Als Polyisocyanate a) kommen hierbei alle Isocyanate mit zwei oder mehreren Isocyanatgruppen im Molekül zum Einsatz. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI) verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate.
Besonders bevorzugt werden für das erfindungsgemäße Verfahren Toluylendiisocyanat (TDI), Diphenylmethandiisocyanat (MDI) oder Mischungen aus Diphenylmethandiisocyanat und Polymethylenpolyphenylenpolyisocyanaten verwendet.

Als Verbindungen mit mindestens zwei aktiven Wasserstoffatomen b), die gemeinsam mit den erfindungsgemäß verwendeten Polyethercarbonatpolyolen bi) eingesetzt werden können, kommen insbesondere Polyesterpolyole und vorzugsweise Polyetherpolyole mit einer Funktionalität von 2 bis 8, insbesondere von 2 bis 4, vorzugsweise 2 bis 3 und einem Molekulargewicht $M_n$ im Bereich von 400 bis 8500, vorzugsweise 1000 bis 6000 g/mol in Betracht. Die Polyetherpolyole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzte Alkohole sind zweiwertige Alkohole, beispielsweise Ethylenglykol, Propylenglykol, oder Butandiole, dreiwertige Alkohole, beispielsweise Glyzerin, Trimethylolpropan oder Ricinusöl oder Pentaerythrit, sowie höherwertige Alkohole, wie Zuckeralkohole, beispielsweise Saccharose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, aromatische Amine, beispielsweise Toluylendiamin oder Diaminodiphenylmethan, sowie Aminoalkohole, wie Ethanolamin oder Diethanolamin.

Die Herstellung der Polyetherpolyole erfolgt üblicherweise durch katalytische Anlagerung von Alkylenoxiden, insbesondere Ethylenoxid und/oder Propylenoxid, an H-funktionelle Startsubstanzen. Als Katalysatoren werden vorzugsweise basische Verbindungen, insbesondere Hydroxide von Alkalimetallen, eingesetzt. In jüngerer Zeit werden häufig auch Multimetallcyanidverbindungen, auch als DMC-Katalysatoren bezeichnet, eingesetzt.

Als Polyetherpolyole können auch polymermodifizierte Polyetherpolyole eingesetzt werden. Diese werden zumeist durch in-situ-Polymerisation von olefinisch ungesättigten Monomeren, insbesondere Acrylnitril und/oder Styrol in den Polyetherpolyolen hergestellt. Zu den polymermodifizierten Polyetherpolyolen gehören auch Polyharnstoffdispersionen enthaltende Polyetherpolyole.

Die polymermodifizierten Polyetherpolyole haben vorzugsweise eine Hydroxylzahl im Bereich 10 bis 100 mgKOH/g, bevorzugt 15 bis 60 mgKOH/g, und vorzugsweise einen Feststoffanteil von 2-60 Gew.-%, bevorzugt von 5-50 Gew.-%.

Für bestimmte Einsatzgebiete kann es zweckmäßig sein, zur Herstellung der Polyurethan-Weichschaumstoffe neben den genannten Polyhydroxylverbindungen zusätzlich sogenannte Kettenverlängerungsmittel und/oder Vernetzungsmittel mitzuverwenden. Als derartige Mittel kommen polyfunktionelle, insbesondere di- und trifunktionelle Verbindungen mit Molekulargewichten von $M_n$ 62 bis 600, vorzugsweise 62 bis 300 g/mol, in Betracht. Verwendet werden beispielsweise Di- und Trialkanolamine, wie Diethanolamin und Triethanolamin, aliphatische und aromatische Diamine, wie z. B. Ethylendiamin, Butylendiamin, Butylendiamin-1,4, Hexamethylendiamin-1,6, 4,4'-Diaminodiphenylmethan, 3,3'-dialkylsubstituierte 4,4'-Diaminodiphenylmethane, 2,4- und 2,6-Toluylendiamin und vorzugsweise aliphatische Diole und Triole mit 2 bis 6 Kohlenstoffatomen, wie Ethylenglykol, Propylenglykol, 1,4'-Butylenglykol, 1,6-Hexamethylenglykol, Glyzerin und Trimethylolpropan.

Sofern Kettenverlängerungs- oder Vernetzungsmittel eingesetzt werden, kommen diese in Mengen von 1 bis 20 Gew.-Teilen, vorzugsweise von 3 bis 10 Gew.-Teilen pro 100 Gew.-Teile Polyhydroxylverbindungen zur Anwendung.

Die Umsetzung erfolgt üblicherweise in Gegenwart von Treibmitteln, Katalysatoren sowie Hilfs- und/oder Zusatzstoffen statt.

Als Treibmittel für das erfindungsgemäße Verfahren wird zumeist Wasser, das mit Isocyanatgruppen unter Bildung von Kohlendioxid reagiert, eingesetzt. Die Wassermengen, die zweckmäßigerweise verwendet werden, betragen, abhängig von der angestrebten Dichte der Schaumstoffe, 0,1 bis 8 Gewichtsteile, vorzugsweise 1,5 bis 5 Gewichtsteile, bezogen auf 100 Gewichtsteile Komponente b).

Im Gemisch mit Wasser können gegebenenfalls auch sogenannte physikalisch wirkende Treibmittel eingesetzt werden. Dies sind Flüssigkeiten, welche gegenüber den Rezepturbestandteilen inert sind und Siedepunkte unter 100 °C, vorzugsweise unter 50 °C, insbesondere zwischen -50 °C und 30 °C bei Atmosphärendruck aufweisen, so dass sie unter dem Einfluss der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethlyether und Diethylether, Ketone, wie Aceton und Methylethylketon, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Als Treibmittel kann auch Kohlendioxid eingesetzt werden, das vorzugsweise als Gas in den Ausgangskomponenten gelöst wird.

Bevorzugt werden Wasser und/ oder Kohlendioxid als Treibmittel verwendet.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 50 Gewichtsteile, vorzugsweise 0 bis 20 Gewichtsteile pro 100 Gewichtsteile Polyhydroxylverbindung.

Der Reaktionsmischung können auch noch Hilfsmittel und/oder Zusatzstoffe einverleibt werden. Genannt seien

beispielsweise äußere und innere Trennmittel, Schaumstabilisatoren, Hydrolyseschutzmittel, Porenregler, fungistatisch und bakteriostatisch wirkende Substanzen, Farbstoffe, Pigmente, Füllstoffe, oberflächenaktive Stoffe und Flammschutzmittel und Verbindungen zur Verbesserung der Haftfestigkeit bei der Flammkaschierung.

Als Verbindungen, die die Haftfestigkeit bei der Flammkaschierung verbessern, sind beispielsweise phosphorhaltige Flammschutzmittel und Polyole mit aromatischen Struktureinheiten zu nennen. Bevorzugt werden einbaubare oder hochmolekulare Flammschutzmittel eingesetzt, wie Fyrol PNX von AKZO und Exolit OP 560 von Clariant, sowie Bisphenol-A-Alkyoxylate. Bei Einsatz der Polyethercarbonatpolyole bi) kann auf den Einsatz von Zusatzmitteln zur Verbesserung der Haftung bei der Flammkaschierung verzichtet werden.

Als Katalysatoren werden bevorzugt einbaubare oder hochmolekulare Katalysatoren für die Herstellung von Blockweichschaumstoffe verwendet, wie metallorganische Verbindungen, insbesondere Zinn(II)- und Zinksalz der Rizinolsäure, Dimethylaminoethanol, N,N-Dimethyl-N',N'-di(2-hydroxypropyl)-1,3-diaminopropan, N,N-Dimethylaminopropylamin, N,N,N'-Trimethyl-N-hydroxyethyl-bis(aminoethyl)-ether, 6-Dimethylaminoethyl-1-hexanol, N-(2-Hydroxypropyl)imidazol, N-(3-Amino-propyl)imidazol, Aminopropyl-2-methyl-imidazol, N,N,N'-Trimethylaminoethanolamin, 2-(2-(N,N-Dimethylaminoethoxy)ethanol, N-(Dimethyl-3-aminopropyl)harnstoff-derivate und Alkylaminooxamide, wie Bis-(N-(N',N'-dimethylaminopropyl))oxamid, Bis-(N-(N',N'-dimethylaminoethyl))-oxamid, Bis-(N-(N',N'-Imidazolidinylpropyl)ox-amid, Bis-(N-(N',N'-diethylaminoethyl))-oxamid, Bis-(N-(N',N'-diethylaminopropyl)ox-amid, Bis-(N-(N',N'-diethylaminoethyl)oxamid, Bis-(N-(N',N'-diethylimino-1-methylpropyl)oxamid, Bis-(N-(3-Morpholinopropylyl)-oxamid und deren Umsetzungsprodukte mit Alkylenoxiden, vorzugsweise mit einem Molgewicht im Bereich zwischen 160 und 500 g/mol, sowie Verbindungen der allgemeine Formel:

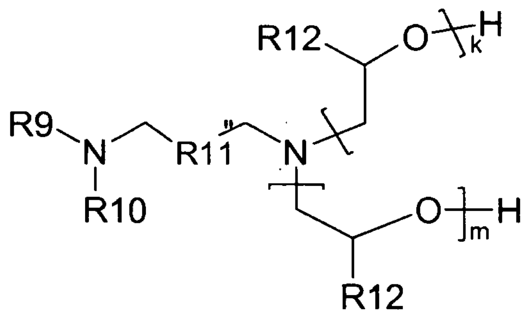

(I)

mit

R9, R10 = $-C_aH_{2a+1}$ mit a = 1 - 4 für acylische Gruppen

R9-R10 = $-C_bH_cN_d-$ mit b = 3 - 7, c = 6 - 14, d = 0 - 2 für cyclische Gruppen

R11 = $C_eH_fO_g$ mit e=0-4, f=0-8, g=0-2

R12 = -H, $-CH_3$, $-C_2H_5$

k, m = gleich oder verschieden 1-5

Diese können einzeln oder in beliebigen Gemischen untereinander eingesetzt werden.

Derartige Katalysatoren und/oder Mischungen werden beispielsweise unter dem Namen Lupragen® DMEA, Lupragen® API, Toyocat® RX 20 und Toyocat® RX 21, DAB-CO® NE 400, DABCO® NE 500, DABCO® NE 600, DABCO® NE 1060 und DABCO® NE 2039, Niax® EF 860, Niax® EF 890, Niax® EF 700, Niax® EF 705, Niax® EF 708, Niax® EF 600, Niax® EF 602, Kosmos® 54, Kosmos® EF, und Tegoamin® ZE 1 im Handel angeboten.

Bei der technischen Herstellung von Polyurethan-Schaumstoffen ist es üblich, die Verbindungen mit mindestens zwei aktiven Wasserstoffatomen und die weiteren Einsatzstoffe sowie Hilfs- und/oder Zusatzstoffe vor der Umsetzung zu einer sogenannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate mit den Verbindungen mit mindestens zwei aktiven Wasserstoffatomen im Beisein der genannten Treibmittel, Katalysatoren und Hilfs- und/oder Zusatzstoffe, die vorzugsweise mit den Verbindungen mit mindestens zwei aktiven Wasserstoffatomen zu einer sogenannten Polyolkomponente vereinigt werden, zur Reaktion gebracht.

Bei der Herstellung der erfindungsgemäßen Polyurethane werden Isocyanat- und Polyolkomponente in einer solchen Menge zusammengebracht, dass der Index vorzugsweise zwischen 50 und 200, bevorzugt zwischen 70 bis 150 und insbesondere zwischen 80 bis 120 liegt.

Die Herstellung der Polyurethan-Schaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen

metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und verschäumt werden. Die Komponenten werden vorzugsweise bei einer Temperatur im Bereich zwischen 15 bis 120 °C, vorzugsweise 20 bis 80 °C vermischt und in das Formwerkzeug beziehungsweise auf die Bandstraße gebracht. Die Temperatur im Formwerkzeug liegt zumeist im Bereich zwischen 15 und 120 °C, vorzugsweise zwischen 30 und 80 °C.

Die nach dem erfindungsgemäßen Verfahren hergestellten Polyurethan-Weichschaumstoffe weisen, wie beschrieben, eine sehr niedrige Emission (VOC und FOG) bei den vom Markt geforderten mechanischen Eigenschaften und Alterungseigenschaften auf. Der Wert für VOC-Emissionen, bestimmt nach VDA 278, liegt bei maximal 100 ppm, der Wert für FOG-Emissionen, bestimmt nach VDA 278, liegt bei maximal 250 ppm.

Sie zeigen bei Block bzw. Forminnentemperaturen von bis zu 165 °C während dem Schäumprozess keine Kernverfärbungen und eine bessere Lichtstabilität.

Ihr Einsatz erfolgt beispielsweise in Kraftfahrzeuginnenräumen, Möbeln, Matratzen, Kissen, Schwämmen, Kleidung und Schuhen, vorzugsweise in Kraftfahrzeuginnenräumen sowie zur Herstellung von Möbeln und Matratzen.

Bei der Flammkaschierung weisen die erfindungsgemäßen Polyurethan-Weichschaumstoffe ohne Mitverwendung von Verbindungen, welche die Haftfestigkeit bei der Flammkaschierung verbessern, eine Haftfestigkeit von mindestens 6 N / 50mm auf.

Die Erfindung soll an den nachstehenden Beispielen näher beschrieben werden.

Analytik:

ATR-FTIR (Attenuated Total Reflection) zur IR-online Messung;

Während der Reaktion werden die Gehalte von freiem Propylenoxid (828 $cm^{-1}$), der Carbonatgehalt im Polyethercarbonatpolyol (1745 $cm^{-1}$) und der Carbonatgehalt im Propylencarbonat (1814 $cm^{-1}$) detektiert. Die Flächenintegrale der Absorbtionen bei angegebenen Wellenzahlen dienen zur Bestimmung der Massengehalte der entsprechenden Spezies. Zuvor erfolgte eine Kalibrierung der ATR-FTIR Sonde.

Zur genauen Bestimmung der Carbonatgehalte der Polyethercarbonatpolyole bi) diente die quantitative $^{13}C$-NMR. Als Grundlage zur Auswertung dienen die Carbonatsignale im Bereich 150-160 ppm. Die Auswertung liefert die Summe der Carbonatgehalte von Polyethercarbonatpolyol und Propylencarbonat des isolierten Produktes.

Mit einer zusätzlichen GC-Messung kann der Propylencarbonatgehalt bestimmt werden und somit auch indirekt der $CO_2$-Gehal im Polyethercarbonatpolyol bi).

Beispiel 1:

Herstellung eines Polyethercarbonatpolyols (110 °C, 7,5 bar) ohne Propylenoxid-Endblock und Funktionalität von 2,75

In einem 20-1-Druckreaktor wurden 5755 g Starterpolyol (Glycerin/Diethylenglycol 3/1 basiertes Polyetherpolyol, OHZ = 139 mgKOH/g) und 262 g einer 6,6 %igen Suspension eines DMC-Katalysators in Starterpolyol bei 130 °C 2 Stunden unter Vakuum (20 mbar) getrocknet. Danach wurde die Mischung auf 110 °C abgekühlt. Bei einer Dosiergeschwindigkeit von 1 kg/h wurden 200 g Propylenoxid aus dem Vakuum dosiert und danach die Dosierung gestoppt. Nach der Aktivierung des Katalysators wurde Kohlendioxid dosiert, bis der Reaktordruck nach 10 Minuten auf 7,5 bar gestiegen war. Nach 40 Minuten wurde Propylenoxid weiterdosiert. Die Propylenoxid Dosierung wurde sukzessive von 0,5 kg/h auf 4,0 kg/h erhöht, wobei mittels ATR-FTIR darauf geachtet wurde, dass die Konzentration an freiem Propylenoxid nicht über 5 % stieg. Die Kohlendioxid Dosierung erfolgte während der gesamten Reaktion mittels eines Regelventils, das den Gesamtdruck bei 7,5 bar hielt. Die Menge von 10520 g Propylenoxid wurde somit innerhalb von 4,5 h dosiert, wobei 1950 g Kohlendioxid verbraucht wurden. Nach beendeter Reaktion wurde der Reaktor entspannt und eine Probe des Rohproduktes entnommen. Danach wurde das Produkt bei 150 °C / 50 mbar 3 Stunden mit Stickstoff gestrippt.
Auswaage: 17,1 kg
Produktdaten:

OHZ =50,1 mgKOH/g
Viskosität (25 °C) = 1869 mPas
Carbonatgehalt des Polyethercarbonatpolyols:

a) Bezogen auf das Gesamtmolekül: 6,8 Gew.-%
b) Bezogen auf den polymersierten Teil ohne Starterpolyol: 10,6 Gew.-%

GPC: Mn = 3066 g/mol; $P_D$=1,98

Aus der Analytik des Rohproduktes ließ sich der Propylengehalt im Rohprodukt bestimmen.
Propylencarbonatgehalt: 4,9 Gew.-%

Beispiel 2:

Herstellung eines Polyethercarbonatpolyols (110 °C, 7,5 bar) mit Propylenoxid-Endblock und einer Funktionalität von 2,75

In einem 20-1-Druckreaktor wurden 5877 g Starterpolyol (Glycerin/ Diethylenglycol 3/1 basiertes Polyetherpolyol, OHZ = 139 mgKOH/g) und 131 g einer 6,6 %igen Suspension eines DMC-Katalysators in Starterpolyol bei 130 °C 2 Stunden unter Vakuum (20 mbar) getrocknet. Danach wurde die Mischung auf 110 °C abgekühlt. Bei einer Dosiergeschwindigkeit von 1 kg/h wurden 150 g Propylenoxid aus dem Vakuum dosiert. Nach der Aktivierung des Katalysators wurde Kohlendioxid parallel dosiert bis der Reaktordruck nach 10 Minuten auf 7,5 bar gestiegen war. Die Propylenoxid Dosierung wurde sukzessive von 1,0 kg/h auf 4,0 kg/h erhöht, wobei mittels ATR-FTIR geachtet wurde, dass die Konzentration an freiem Propylenoxid nicht über 5 % stieg. Die Kohlendioxid Dosierung erfolgte mittels eines Regelventils, das den Gesamtdruck bei 7,5 bar hielt. Nachdem 6500 g Propylenoxid dosiert waren, wurde die Kohlendioxid Dosierung gestoppt ohne die Propylenoxid Dosierung zu unterbrechen. Die Gesamtmenge von 10520 g Propylenoxid wurde innerhalb von 4 Stunden dosiert. Die Gesamtmenge Kohlendioxid betrug 1253 g. Nach beendeter Reaktion wurde der Reaktor entspannt. Das Produkt wurde bei 150 °C / 50 mbar 3 Stunden mit Stickstoff gestrippt.
Auswaage: 16,7 kg
Produktdaten:

OHZ: 49,6 mgKOH/g
Viskosität (25 °C) = 1280 mPas
Carbonatgehalt des Polyethercarbonatpolyols:

a) Bezogen auf das Gesamtmolekül: 5,3 Gew.-%
b) Bezogen auf den polymersierten Teil ohne Starterpolyol: 8,4 Gew.-%

GPC: $M_n$ = 2989 g/mol; $P_D$=1,58

Aus der Analytik des Rohproduktes ließ sich der Propylengehalt im Rohprodukt bestimmen.
Propylencarbonatgehalt: 3,3 Gew.-%

Beispiel 3:

Herstellung eines Polyethercarbonatpolyols (110 °C, 4,0 bar) mit Propylenoxid- Endblock und einer Funktionalität von 2,75

In einem 20-1-Druckreaktor wurden 5939 g Starterpolyol (Glycerin/ Diethylenglycol 3/1 basiertes Polyetherpolyol, OHZ = 141 mgKOH/g) und 62 g einer 5,7 %igen Suspension eines DMC-Katalysators in Starterpolyol bei 130 °C 2 Stunden unter Vakuum (20 mbar) getrocknet. Danach wurde die Mischung auf 110 °C abgekühlt. Bei einer Dosiergeschwindigkeit von 1,5 kg/h wurden 450 g Propylenoxid aus dem Vakuum dosiert und danach die Dosierung gestoppt. Nach der Aktivierung des Katalysators wurde Kohlendioxid dosiert bis der Reaktordruck auf 4,0 bar gestiegen war (5 min). Nach 20 min wurde Propylenoxid weiterdosiert. Die Propylenoxid Dosierung wurde sukzessive von 1,0 kg/h auf 3,5 kg/h erhöht, wobei mittels ATR-FTIR geachtet wurde, dass die freie Propylenoxid-Konzentration nicht über 5 % stieg. Die Kohlendioxid Dosierung erfolgte während der gesamten Reaktion mittels eines Regeiventils, das den Gesamtdruck bei 4,0 bar hielt. Nachdem 8800 g Propylenoxid dosiert waren, wurde die Kohlendioxid Dosierung gestoppt ohne die Propylenoxid Dosierung zu unterbrechen. Die Gesamtmenge von 10463 g Propylenoxid wurde innerhalb von 5,5 Stunden dosiert. Die Gesamtmenge Kohlendioxid betrug 670 g. Nach beendeter Reaktion wurde der Reaktor entspannt. Das Produkt wurde bei 160 °C / 50 mbar 3 Stunden mit Stickstoff gestrippt.
Auswaage: 16,4 kg
Produktdaten:

OHZ = 47,0 mgKOH/g
Viskosität (25 °C) =936 mPas
Carbonatgehalt des Polyethercarbonatpolyols:

a) Bezogen auf das Gesamtmolekül: 3,5 Gew.-%
b) Bezogen auf den polymersierten Teil ohne Starterpolyol: 4,9 Gew.-%

GPC: $M_n$ = 3851 g/mol; $P_D$=1,72

Aus der Analytik des Rohproduktes ließ sich der Propylengehalt im Rohprodukt bestimmen.
Propylencarbonatgehalt: 2,2 Gew.-%

Beispiel 4:

Herstellung eines Polyethercarbonatpolyols (110 °C, 3,0 - 8,0 bar) mit Propylenoxid-Endblock und einer Funktionalität von 2,75

In einem 20-1-Druckreaktor wurden 5939 g Starterpolyol (Glycerin/ Diethylenglycol 3/1 basiertes Polyetherpolyol, OHZ = 141 mgKOH/g) und 61 g einer 5,7 %igen Suspension eines DMC-Katalysators in Starterpolyol bei 130 °C 2 Stunden unter Vakuum (20 mbar) getrocknet. Danach wurde die Mischung auf 110 °C abgekühlt. Bei einer Dosiergeschwindigkeit von 1,5 kg/h wurden 450 g Propylenoxid aus dem Vakuum dosiert und danach die Dosierung gestoppt. Nach der Aktivierung des Katalysators wurde Kohlendioxid dosiert, bis der Reaktordruck auf 3,0 bar gestiegen war (3 min). Nach 15 min wurde Propylenoxid weiterdosiert. Die Propylenoxid Dosierung wurde sukzessive von 1,0 kg/h auf 4,0 kg/h erhöht, wobei mittels ATR-FTIR geachtet wurde, dass die Konzentration an freiem Propylenoxid nicht über 5 % stieg. Gleichzeitig wurde innerhalb von 2,5 Stunden der Gesamtdruck mittels Kohlendioxid Regelventil von 3,0 bar auf 8,0 bar durch Kohlendioxid Dosierung erhöht. Nachdem 8600 g Propylenoxid dosiert waren, wurde die Kohlendioxid Dosierung gestoppt ohne die Propylenoxid Dosierung zu unterbrechen. Die Gesamtmenge von 10463 g Propylenoxid wurde innerhalb von 5,5 Stunden dosiert. Die Gesamtmenge Kohlendioxid betrug 1391 g. Nach beendeter Reaktion wurde der Reaktor entspannt. Das Produkt wurde bei 120 °C 50 mbar mit Stickstoff 2 Stunden gestrippt.
Auswaage: 17,1 kg
Produktdaten:

OHZ = 45,2 mgKOH/g
Viskosität (25 °C) =1534 mPas
Carbonatgehalt des Polyethercarbonatpolyols:

a) Bezogen auf das Gesamtmolekül: 6,3 Gew.-%
b) Bezogen auf den polymersierten Teil ohne Starterpolyol: 9,1 Gew.-%

GPC: $M_n$ = 3543 g/mol; $P_D$=1,63

Aus der Analytik des Rohproduktes ließ sich der Propylengehalt im Rohprodukt bestimmen.
Propylencarbonatgehalt: 2,3 Gew.-%

Beispiel 5:

Herstellung eines Polyethercarbonats (110 °C, 3,0 - 8,0 bar) mit Propylenoxid-Endblock und einer Funktionalität von 2,0

In einem 20-I-Druckreaktor wurden 3732 g Starterpolyol (homo-Polypropylenoxid, OHZ = 250 mgKOH/g) und 68 g einer 5,1 %igen Suspension eines DMC-Katalysators in Starterpolyol bei 130 °C 2 Stunden unter Vakuum (20 mbar) getrocknet. Danach wurde die Mischung auf 110 °C abgekühlt. Bei einer Dosiergeschwindigkeit von 1,5 kg/h wurden 500 g Propylenoxid aus dem Vakuum dosiert und danach die Dosierung gestoppt. Nach der Aktivierung des Katalysators wurde Kohlendioxid dosiert bis der Reaktordruck auf 3,0 bar gestiegen war (3 min). Nach 15 min wurde Propylenoxid weiterdosiert. Die Propylenoxid Dosierung wurde sukzessive von 1,0 kg/h auf 4,0 kg/h erhöht, wobei mittels ATR-FTIR geachtet wurde, dass die Konzentration an freiem Propylenoxid nicht über 5 % stieg. Gleichzeitig wurde innerhalb von 3 Stunden der Gesamtdruck mittels Kohlendioxid Regelventil von 3,0 bar auf 8,0 bar durch Kohlendioxid Dosierung erhöht. Nachdem 10500 g Propylenoxid dosiert waren, wurde die Kohlendioxid Dosierung gestoppt ohne die Propylenoxid Dosierung zu unterbrechen. Die Gesamtmenge von 11876 g Propylenoxid wurde innerhalb von 4,5 Stunden dosiert. Die Gesamtmenge Kohlendioxid betrug 1497 g. Nach beendeter Reaktion wurde der Reaktor entspannt. Das Produkt wurde bei 160 °C / 50 mbar 2h mit Stickstoff gestrippt.
Auswaage: 16,1 kg
Produktdaten:

OHZ = 53,9 mgKOH/g
Viskosität (25 °C) = 793 mPas
Carbonatgehalt des Polyethercarbonatpolyols:

a) Bezogen auf das Gesamtmolekül: 6,9 Gew.-%
b) Bezogen auf den polymersierten Teil ohne Starterpolyol: 8,8 Gew.-%

GPC: $M_n$ = 2107 g/mol; $P_D$=1,60

Aus der Analytik des Rohproduktes ließ sich der Propylengehalt im Rohprodukt bestimmen.
Propylencarbonatgehalt: 2,6 Gew.-%

Herstellung der Polyurethan-Weichschaumstoffe

Vergleichsbeispiele 1 und Beispiele 6 bis 8

Die in Tabelle 1 genannten Ausgangsprodukte wurden in den in Tabelle 1 aufgeführten Mengenverhältnissen zur Umsetzung gebracht.

Alle Komponenten außer dem Isocaynat Lupranat® T 80 A wurden zunächst durch intensives Mischen zu einer Polyolkomponente vereinigt. Danach wurde das Lupranat® T 80 A unter Rühren hinzugegeben und die Reaktionsmischung in eine offene Form vergossen, worin sie zum Polyurethan-Schaumstoff ausschäumte. Die Kennwerte der erhaltenen Schäume sind in Tabelle 1 aufgeführt.

Die folgenden Kennwerte sind nach den genannten Normen, Arbeits- und Prüfanweisungen bestimmt worden:

| | |
|---|---|
| Raumgewicht in kg/$m^3$ | DIN EN ISO 845 |
| Luftdurchlässigkeit in $dm^3$/min | DIN EN ISO 7231 |
| Stauchhärte, 40 % Verformung in kPa | DIN EN ISO 2439 |
| Eindruckhärte, 40 % Verformung | DIN EN ISO 2439 |
| Dehnung in % nach | DIN EN ISO 1798 |
| Zugfestigkeit in kPa | DIN EN ISO 1798 |
| Rückprall-Elastizität in % | DIN EN ISO 8307 |
| Druckverformungsrest in % | DIN EN ISO 3386 |

| | |
|---|---|
| Feuchtwärmelagerung | DIN EN ISO 2240 |
| Wet-Compression-Set | Arbeitsanweisung AA U 10-131-041 vom 06.02.02 |
| FOG in ppm | VDA 278 |
| VOC in ppm | VDA 278 |

Die Bestimmung des Wet-Compression-Set erfolgte nach der Arbeitsanweisung AA U10-131-041 vom 06.02.02:

Mittels Messschieber bzw. Messtaster wird die Höhe an einer vorher markierten Stelle der Schaum-Prüflinge der Maße 50 mm x 50 mm x 25 mm bestimmt. Anschließend werden die Prüflinge zwischen zwei Druckplatten gelegt und durch Abstandsstücke von 7,5 mm auf diese Höhe mittels Einspannvorrichtung zusammen gedrückt.

Die Lagerung im Klimaschrank bei 50 °C und 95 % rel. Luftfeuchtigkeit beginnt unmittelbar nach dem Einspannen. Nach 22 Stunden werden die Schaum-Prüflinge in kürzester Zeit aus der Einspannvorrichtung entfernt und auf einer Oberfläche mit geringer Wärmeleitung (Tablett) zum Entspannen im Normklima 30 min zwischengelagert. Anschließend wird die Resthöhe an der markierten Stelle mit dem gleichen Messmittel bestimmt.

Der Wet-Compression-Set bezieht sich auf die Verformung und wird wie folgt berechnet:

$$\text{Wet-Compression-Set} = (h_0-h_R)*100/\ (h_0-7{,}5\ \text{mm})\ \text{in}\ \%$$

ho Ursprungshöhe in mm
$h_R$ Resthöhe des Prüfkörpers in mm

Bestimmung der Haftfestigkeitsbestimmung erfolgte nach der Arbeitsanweisung AA U-10-131-039 vom 31.01.2002

Zur Messung der Haftfestigkeit wurden Schaumstoffproben (1,5 m x 100 mm x 5 mm) des Vergleichsbeispiels 1 und der Beispiel 6-8 auf einer Laborkaschieranlage, einseitig gelagert mit regelbarer Kaschiergeschwindigkeit, Propangasbalkenbrenner und Misch- und Dosiereinheit für Luft-Brenngasgemisch, von Maria Heller, Labortechnik, 67112 Mutterstadt unter analogen Bedingungen mit einem textilen Polyesterflachgewebe flammkaschiert. Die Kaschiergeschwindigkeit betrug jeweils 15 m/min. Die Messung der Haftfestigkeit nach 24 Stunden erfolgt nach der Arbeitsanweisung AA U-10-131-039

Die Methode dient zur Bestimmung der Haftfestigkeit an entnommenen Prüflingen aus beschichteten Polyurethanschaumstoffen, z. B. mit Folie oder Stoff. Die Haftfestigkeit dient zur Beurteilung des Schälverhaltens der Verbundschichten. Es wird 1 Prüfling pro Richtung des Materials, mit den Abmessungen Breite 50 mm x Länge 300 mm x max. Dicke 15 mm hergestellt. Anschließend wird das Trägermaterial von der Schmalseite auf einer Länge von ca. 40 mm gelöst.

Die Lagerung bzw. Prüfung erfolgt gemäß Normklima DIN 50014-23/50-2.

Durchführung

Die Universalprüfmaschine für die Bestimmung der Haftfestigkeit ausrüsten, d. h. Einbau der Einspannvorrichtung. Aufruf der entsprechenden Zwickprüfvorschrift, Traverse positionieren, Kontrolle der Prüfgeschwindigkeit von 125 mm/min. Den Schaum des Prüflings in die bewegliche Traverse und das abgelöste Material in die starre Traverse einspannen. Das Obermaterial wird über eine Strecke von mindestens 100 mm abgeschält.

Berechnung

Die Einzelergebnisse der Spitzenwerte der Kraft, unter Vernachlässigung des 1. Viertels der Prüfstrecke, werden pro Richtung des Materials mit Hilfe der EDV-Anlage als Prüfergebnisse in N/50 mm mit einer Nachkommastelle im Prüfbericht notiert. Des weiteren wird die Lage der Bruchstelle wie folgt angegeben:

- Bruch vor der 100 mm Strecke d. h. der Schaum riss ab = Ja
- Kein Bruch vor der 100 mm Strecke d. h. der Schaum schälte sich gleichmäßig vom Trägermaterial ab

| A-Komponente | Vergleichsbeispiel 1 | Beispiel 6 | Beispiel 7 | Beispiel 8 |
|---|---|---|---|---|
| Lupranol® 2084 | 100,00 | | | |
| Polyethercarbonatpolyol aus Beispiel 1 | | 100,00 | | |
| Polyethercarbonatpolyol aus Beispiel 3 | | | 100,00 | |
| Polyethercarbonatpolyol aus Beispiel 4 | | | | 100,00 |
| Lupragen® N 201 | 0,075 | 0,075 | | |
| Lupragen® N 206 | 0,025 | 0,025 | | |
| DABCO® NE 500 | | | 0,32 | 0,32 |
| Tegostab® B 4900 | 1,00 | 1,00 | 1,00 | 1,00 |
| Kosmos 29 | 0,20 | 0,22 | | |
| Kosmos® EF/Kosmos® 54 - 3:1 | | | 0,60 | 0,60 |
| Wasser | 3,80 | 3,80 | 2,30 | 2,30 |
| B-Komponente | | | | |
| LupranatT80A-Index | 113 | 113 | 110 | 110 |
| Verschäumung | | | | |
| Startzeit in s | 14 | 21 | 20 | 21 |
| Gelzeit in s | 96 | 126 | 125 | 122 |
| Steigzeit in s | 113 | 136 | 132 | 133 |

(fortgesetzt)

| A-Komponente | Vergleichsbeispiel 1 | Beispiel 6 | Beispiel 7 | Beispiel 8 |
|---|---|---|---|---|
| Beschreibung | bläst leicht ab | bläst kaum ab | bläst leichtab | bläst leicht ab |
| Mechanik | | | | |
| Eindruckhärte B 40% in N | 203 | 189 | 156 | 166 |
| Raumgewicht in kg/m$^3$ | 28,5 | 29,5 | 38 | 38,2 |
| Stauchhärte 40% in kPa | 5,6 | 6,0 | 4,1 | 4,3 |
| Druckverformungsrest in % | 2,7 | 2,2 | 4,3 | 4,2 |
| Druckverformungsrest nach Feuchtwärmelagerung in % | 6,2 | 7,7 | 7,1 | 9,2 |
| Wet Compression Set in % | 7,1 | 8,3 | 8,3 | 11,3 |
| Zugfestigkeit in kPa | 78 | 79 | 68 | 69 |
| Bruchdehnung in % | 81 | 77 | 102 | 104 |
| Rückprallelastizität in % | 43 | 36 | 30 | 28 |
| LDL in dm$^3$/min | 91 | 108 | 90 | 70 |
| Flammkaschierung | | | | |
| Haftfestigkeit in N/50mm | keine Haftung | 9,0 | 5,2 | 8,1 |
| kohäsiver Bruch | nein | ja | nein | ja |
| Emmission | | | | |
| FOG in ppm | 109 | 118 | 112 | 124 |
| VOC in ppm | 448 | 76 | 68 | 87 |

Erläuterungen zur Tabelle

| | |
|---|---|
| Lupranol® 2084 | Lupranol 2084 ist ein auf Glycerin/ Diethylenglycol (3/1) basier-tes Polyetherpolyol der BASF AG mit überwiegend sekundären Hydroxylendgruppen, hergestellt mittels der DMC-Katalyse mit einer Hydroxylzahl von 48 mgKOH/g und einer Viskosität bei 25 °C von 600 mPa·s. |
| Lupragen® N201: | 1,4-Diazabicyclo-[2,2,2]-octan (33 %) in Dipropylenglykol (67 %), (BASF AG) |
| Lupragen® N206: | Bis-(2-Dimethylaminoethyl)ether (70 %) in Dipropylenglykol (30 %), (BASF AG) |
| DABCO® NE 500 | einbaubarer Aminkatalysator (Air Products) |
| Kosmos® 29: | Zinn-II-Salz der Ethylhexansäure (Degussa AG) |
| Kosmos® EF und 54 | Einbaurere Zinn bw. Zinkkatalysatoren (Degussa AG) |
| Tegostab® B 4900: | Silikonstabilisator (Degussa AG) |
| Lupranat® T 80 A: | 2,4-/2,6-Toluylendiisocyanatgemisch im Verhältnis 80:20 (BASF AG) |

## Patentansprüche

**1.** Verfahren zur Herstellung von Polyurethan-Weichschaumstoffen durch Umsetzung von

a) Polyisocyanaten mit
b) Verbindungen mit mindestens zwei mit Isocyanatgruppen reaktiven Wasserstoffatomen, in Gegenwart von
c) Treibmitteln,

**dadurch gekennzeichnet, dass** die Komponente b) mindestens ein Polyethercarbonatpolyol bi), herstellbar durch Anlagerung von Kohlendioxid und Alkylenoxiden an H-funktionelle Startsubstanzen unter Verwendung von DMC-Katalysatoren, enthält, das eine Funktionalität von mindestens 2, eine Hydroxylzahl im Bereich von 10 bis 500 mgKOH/g und einen Gehalt von eingebautem Kohlendioxid in Form von Carbonateinheiten von mindestens 2 Gew.-

% besitzt und am Ende der Polyethercarbonatpolyol-Kette einen Block aus reinen Alkylenoxideinheiten aufweisen.

2. Verfahren nach Anspruch 1, **dadurch gekennzeichnet, dass** das Polyethercarbonatpolyol bi) eine Funktionalität von 2 bis 8 aufweist.

3. Verfahren nach Anspruch 1, **dadurch gekennzeichnet, dass** als Startsubstanzen für die Herstellung der Polyethercarbonatpolyole bi) Diethylenglykol, Dipropylenglykol, Glyzerin, Trimethylolpropan, Pentaerythrit, Rizinusöl, hydroxyfunktionalisierte Fette und Öle und/oder Glyzerin eingesetzt werden.

4. Verfahren nach Anspruch 1, **dadurch gekennzeichnet, dass** das Polyethercarbonatpolyol bi) 2-25 Gew.-% Kohlendioxid, 0 -40 Gew.-% Ethylenoxid und 35 - 98 Gew.-% Propylenoxid, jeweils bezogen auf das Gewicht des Polyethercarbonats enthält.

5. Verfahren nach Anspruch 1, **dadurch gekennzeichnet, dass** das Polyethercarbonat bi) eine Struktur der allgemeinen Formel (I) aufweist,

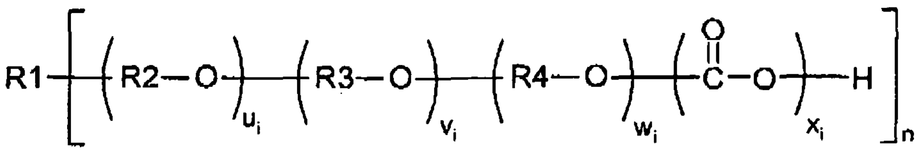

(I)

wobei

R1 Startersubstanz-Rest ohne die für die Alkoxylierung aktiven H-Atome,
R2 $CH_2$-$CH_2$
R3 $CH_2$-$CH(CH_3)$
R4 $CH_2$-CH(R5), CH(R6)-CH(R6), $CH_2$-$C(R6)_2$, $C(R6)_2$-$C(R6)_2$,

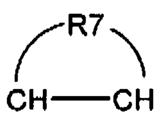

$CN_2$-CH-$CH_2$-R8, $C_6H_6$-CH-$CH_2$, $C_6H_6$-$(CH_3)CH_2$, Molekülrest von ein- oder mehrfach epoxidierten Fetten oder Ölen als Mo- no-, Di- und Triglyceride. Molekülrest von ein- oder mehrfach epoxdierten Fettsäuren oder deren C1-C24-Alkylestem
R5 $C_2$ bis $C_{24}$ -Alkylrest, Alkenrest, der linear oder verzweigt sein kann
R6 $C_1$ bis $C_{24}$ -Alkylrest, Alkenrest, der linear oder verzweigt sein kann
R7 $C_3$ bis $C_6$ Alkylrest, der linear angeordnet ist
R8 OH, Cl, $OCH_3$, $OCH_2$-$CH_3$. O-$CH_2$-CH=$CH_2$, O-CH=$CH_2$, und
$u_i$, $v_i$, $w_i$ ganze Zahlen von 0 - 400; mit mindestens einem der Indizes $u_i$, $v_i$ oder $w_i \geq 1$;
$x_i$ ganze Zahl von 1 bis 100; wobei zusätzlich gilt, dass in der allgemeinen Formel (I) für Polyethercarbonatpolyole bi) weder eine -C(=O)-O-C(=O)-O- Bindungen (Carbonat-Carbonat Bindung) noch eine -C(=O)-OH Bindung am Kettenende auftritt.
n ganze Zahl von 2 bis 100, bevorzugt von 2 bis 8, besonders bevorzugt 2 bis 4, insbesondere 2 und 3.
i ganze Zahl mit i = 1 bis n bedeuten.

6. Verfahren nach Anspruch 1, **dadurch gekennzeichnet, dass** das Polyethercarbonat bi) eine Struktur der allgemeinen Formel (II) aufweist.

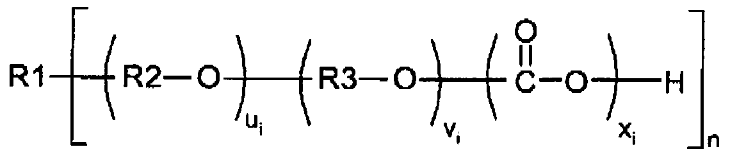

(II)

wobei
R1, R2 und R3 die gleiche Bedeutung wie in Formel (I) haben. und

$u_i$, $v_i$ ganze Zahlen von 0 - 400; mit mindestens u;, oder $v_i \geq 1$;
$x_i$ ganze Zahl von 1 bis 100; wobei zusätzlich gilt, dass in der allgemeinen Formel (II) für Polyethercarbonatpolyole bi) weder eine -C(=O)-O-C(=O)-O- Bindungen (Carbonat-Carbonat Bindung) noch eine -C(=O)-OH Bindung am Kettenende auftritt.
n ganze Zahl von 2 bis 100, bevorzugt von 2 bis 8, besonders bevorzugt 2 bis 4, insbesondere 2 und 3.
i ganze Zahl mit i = 1 bis n sind.

**7.** Verfahren nach Anspruch 1, **dadurch gekennzeichnet, dass** das Polyethercarbonat bi) eine Struktur der allgemeinen Formel (III) aufweist,

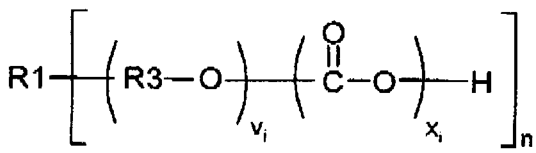

(III)

wobei R1 und R3 die gleiche Bedeutung wie in Formel (I) haben, und

$V_i$ eine ganze Zahl von 4 - 400 ist
$X_i$ eine ganze Zahl von 1 bis 100 ist; wobei zusätzlich gilt, dass in der allge- meinen Formel (III) für Polyethercarbonatpolyole bi) weder eine -C(=O)-O- C(=O)-O- Bindungen (Carbonat-Carbonat Bindung) noch eine -C (=O)-OH Bindung am Kettenende auftritt.
n ganze Zahl von 2 bis 100, bevorzugt von 2 bis 8, besonders bevorzugt 2 bis 4, insbesondere 2 und 3 ist und
i ganze Zahl mit i = 1 bis n ist.

**8.** Verfahren nach Anspruch 1, **dadurch gekennzeichnet, dass** als Polyisocyanate a) Toluylendiisocyanat, Diphenylmethandiisocyanat oder Mischungen aus Diphenylmethandiisocyanat und Polymethylenpolyphenylenpolyisocyanaten eingesetzt werden.

**9.** Polyurethan-Weichschaumstoffe, herstellbar nach einem der Ansprüche 1 bis 9.

## Claims

**1.** A process for producing flexible polyurethane foams by reacting

a) polyisocyanates with
b) compounds having at least two hydrogen atoms which are reactive toward isocyanate groups in the presence of
c) blowing agents,

wherein the component b) comprises at least one polyether carbonate polyol bi) which can be prepared by addition of carbon dioxide and alkylene oxides onto H-functional starter substances using DMC catalysts, has a functionality of at least 2, a hydroxyl number in the range from 10 to 500 mg KOH/g and a content of incorporated carbon dioxide in the form of carbonate units of at least 2% by weight and has a block of pure alkylene oxide units at the end of the polyether carbonate polyol chain.

**2.** The process according to claim 1, wherein the polyether carbonate polyol bi) has a functionality of from 2 to 8.

**3.** The process according to claim 1, wherein diethylene glycol, dipropylene glycol, glycerol, trimethylolpropane, pentaerythritol, castor oil, hydroxy-functionalized fats and oils and/or glycerol are used as starter substances for the preparation of the polyether carbonate polyols bi).

**4.** The process according to claim 1, wherein the polyether carbonate polyol bi) comprises 2 - 25% by weight of carbon dioxide, 0 - 40% by weight of ethylene oxide and 35 - 98% by weight of propylene oxide, in each case based on the weight of the polyether carbonate.

**5.** The process according to claim 1, wherein the polyether carbonate bi) has a structure of the general formula (I),

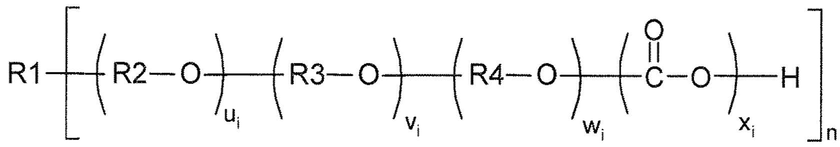 (I)

where

R1 is a starter substance radical without the H atoms which are active in respect of alkylation,
R2 is $CH_2$-$CH_2$,
R3 is $CH_2$-$CH(CH_3)$,
R4 is $CH_2$-CH(R5), CH(R6)-CH(R6), $CH_2$-$C(R6)_2$, $C(R6)_2$- $C(R6)_2$,

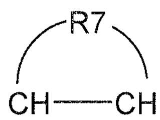

$CH_2$-CH-$CH_2$-R8, $C_6H_6$-CH-$CH_2$, $C_6H_6$-$C(CH_3)$-$CH_2$, molecular radical of monoepoxidized or multiply epoxidized fats or oils as monoglycerides, diglycerides and triglycerides, molecular radical of monoexpoxidized or multiply epoxidized fatty acids or their $C_1$-$C_{24}$-alkyl esters,
R5 is a $C_2$-$C_{24}$-alkyl radical, alkene radical which may be linear or branched,
R6 is a $C_1$-$C_{24}$alkyl radical, alkene radical which may be linear or branched,
R7 is a $C_3$-$C_6$-alkyl radical which is arranged linearly,
R8 is OH, Cl, $OCH_3$, $OCH_2$-$CH_3$, O-$CH_2$-CH=$CH_2$, O- CH=$CH_2$, and
$u_i$, $v_i$, $w_i$ are integers of 0 - 400; with at least one of the indices $u_i$, $v_i$ or $w_i$ being ≥ 1;
$x_i$ is an integer from 1 to 100, where, in addition, neither a -C(=O)-O-C(=O)-O- bond (carbonate- carbonate bond) occur nor a -C(=O)-OH bond occurs at the end of the chain in polyether carbonate polyols bi) of the general formula (I);
n is an integer from 2 to 100, preferably from 2 to 8, particularly preferably from 2 to 4, in particular 2 or 3;
i is an integer from 1 to n.

**6.** The process according to claim 1, wherein the polyether carbonate bi) has a structure of the general formula (II),

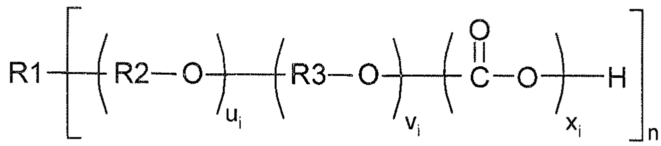 (II)

where
R1, R2 and R3 are as defined in formula (I)
and

$u_i$, $v_i$ are integers of 0 - 400; with at least $u_i$, or $v_i$ being ≥ 1;

$x_i$ is an integer from 1 to 100, where, in addition, neither -C(=O)-O-C(=O)-O- bonds (carbonate- carbonate bond) occur nor a -C(=O)-OH bond occurs at the end of the chain in polyether carbonate polyols bi) of the general formula (II);
n is an integer from 2 to 100, preferably from 2 to 8, particularly preferably from 2 to 4, in particular 2 or 3;
i is an integer from 1 to n.

**7.** The process according to claim 1, wherein the polyether carbonate bi) has a structure of the general formula (III),

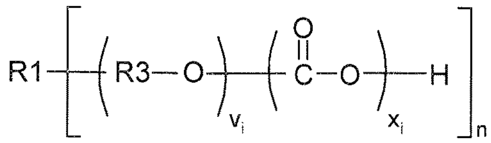 (III)

where R1 and R3 are as defined in formula (I) and

$v_i$ is an integer of 4 - 400;
$x_i$ is an integer from 1 to 100, where, in addition, neither a -C(=O)-O-C(=O)-O- bond (carbonate- carbonate bond) occur nor a -C(=O)-OH bond occurs at the end of the chain in polyether carbonate polyols bi) of the general formula (III);
n is an integer from 2 to 100, preferably from 2 to 8, particularly preferably from 2 to 4, in particular 2 or 3;
i is an integer from 1 to n.

**8.** The process according to claim 1, wherein tolylene diisocyanate, diphenylmethane diisocyanate or mixtures of diphenylmethane diisocyanate and polymethylenepolyphenylene polyisocyanates are used as polyisocyanates a).

**9.** A flexible polyurethane foam which can be produced according to any of claims 1 to 8.

## Revendications

**1.** Procédé pour la production de mousses souples de polyuréthanne, par mise en réaction

a) de polyisocyanates avec
b) des composés qui comportent au moins deux atomes d’hydrogène réactifs avec des groupes isocyanate, en présence
c) d’agents d’expansion,

**caractérisé en ce que** le composant b) contient au moins un polyéthercarbonate-polyol bi), pouvant être préparé par fixation par addition de dioxyde de carbone et d’oxydes d’alkylène sur des substances de départ à fonction H, avec utilisation de catalyseurs DMC, qui possède une fonctionnalité d’au moins 2, un indice de groupes hydroxy dans la plage de 10 à 500 mg de KOH/g et une teneur d’au moins 2 % en poids en dioxyde de carbone incorporé sous forme d’unités carbonate et comporte à l’extrémité de la chaîne du polyéthercarbonate-polyol une séquence de motifs oxyde d’alkylène purs.

**2.** Procédé selon la revendication 1, **caractérisé en ce que** le polyéthercarbonate-polyol bi) présente une fonctionnalité de 2 à 8.

**3.** Procédé selon la revendication 1, **caractérisé en ce qu’**on utilise comme substances de départ pour la préparation des polyéthercarbonate-polyols bi) le diéthylèneglycol, le dipropylèneglycol, le glycérol, le triméthylolpropane, le pentaérythritol, l’huile de ricin, des huiles et graisses à fonctionnalisation hydroxy et/ou le glycérol.

**4.** Procédé selon la revendication 1, **caractérisé en ce que** le polyéthercarbonate-polyol bi) contient 2 - 25 % en poids de dioxyde de carbone, 0 - 40 % en poids d’oxyde d’éthylène et 35 - 98 % en poids d’oxyde de propylène, chaque

fois par rapport au poids du polyéthercarbonate.

**5.** Procédé selon la revendication 1, **caractérisé en ce que** le polyéthercarbonate bi) présente une structure de formule générale (I),

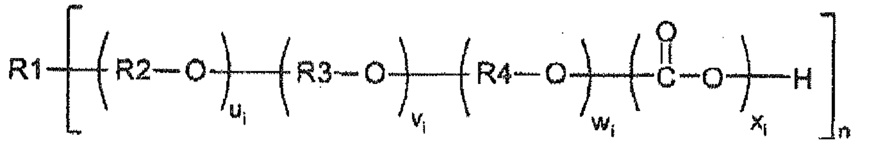

(I)

dans laquelle

R1 représente le reste d'une substance de départ sans les atomes d'hydrogène actifs pour l'alcoxylation,
R2 représente $CH_2$-$CH_2$
R3 représente $CH_2$=$CH(CH_3)$
R4 représente $CH_2$-CH(R5), CH(R6)-CH(R6), $CH_2$-$C(R6)_2$, $C(R6)_2$-$C(R6)_2$,

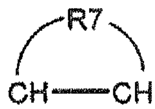

$CH_2$-CH-$CH_2$-R8, $C_6H_6$-CH-$CH_2$, $C_6H_6$-$C(CH_3)$-$CH_2$, le reste de la molécule d'huiles et graisses une ou plusieurs fois époxydées, sous forme de mono-, di- et triglycérides, le reste de la molécule d'acides gras une ou plusieurs fois époxydés ou de leurs esters alkyliques en $C_1$-$C_{24}$
R5 représente un radical alkyle en $C_2$-$C_{24}$, un radical alcène, qui peut être linéaire ou ramifié
R6 représente un radical alkyle en $C_1$-$C_{24}$, un radical alcène, qui peut être linéaire ou ramifié
R7 représente un radical alkyle en $C_3$-$C_6$ qui est linéaire
R8 représente OH, Cl, $OCH_3$, $OCH_2$-$CH_3$, O-$CH_2$-CH=$CH_2$, O-CH=$CH_2$, et
$u_i$, $v_i$, $w_i$ représentent des nombres entiers valant de 0 à 400 ; au moins l'un des indices $u_i$, $v_i$ ou $w_i$ étant ≥ 1 ;
$x_i$ représente un nombre entier de 1 à 100 ; étant en outre entendu que dans la formule générale (I) pour des polyéthercarbonate-polyols bi) à l'extrémité de la chaîne il n'apparaît ni une liaison -C(=O)-O-C(=O)-O- (liaison carbonate- carbonate), ni une liaison -C(=O)-OH,
n représente un nombre entier de 2 à 100, de préférence de 2 à 8, de façon particulièrement préférée de 2 à 4, en particulier 2 ou 3,
i représente un nombre entier, avec i = 1 à n.

**6.** Procédé selon la revendication 1, **caractérisé en ce que** le polyéthercarbonate-polyol bi) présente une structure de formule générale (II),

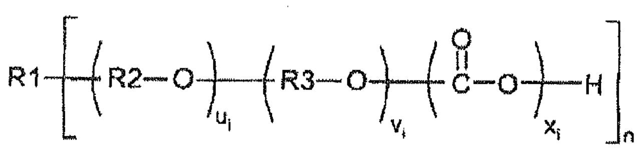

(II)

dans laquelle
R1, R2 et R3 ont les mêmes significations que dans la formule (I),
et

$u_i$, $v_i$ représentent des nombres entiers de 0 à 400; avec au moins $u_i$ ou $v_i$ ≥ 1 ;
$x_i$ représente un nombre entier de 1 à 100 ; étant en outre entendu que dans la formule générale (II) pour des

polyéthercarbonate- polyols bi) à l'extrémité de la chaîne il n'apparaît ni une liaison -C(=O)-O-C(=O)-O- (liaison carbonate-carbonate), ni une liaison -C(=O)-OH,
n représente un nombre entier de 2 à 100, de préférence de 2 à 8, de façon particulièrement préférée de 2 à 4, en particulier 2 ou 3,
i représente un nombre entier, avec i = 1 à n.

**7.** Procédé selon la revendication 1, **caractérisé en ce que** le polyéthercarbonate bi) présente une structure de formule générale (III),

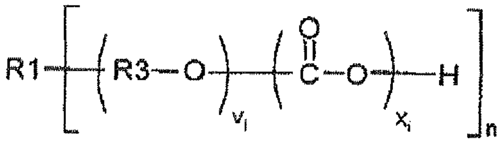

(III)

où R1 et R3 ont les mêmes significations que dans la formule (I),
et

$v_i$ est un nombre entier de 4 à 400
$x_i$ représente un nombre entier de 1 à 100 ; étant en outre entendu que dans la formule générale (III) pour des polyéthercarbonate-polyols bi) à l'extrémité de la chaîne il n'apparaît ni une liaison -C(=O)-O-C(=O)-O- (liaison carbonate- carbonate), ni une liaison -C(=O)-OH,
n représente un nombre entier de 2 à 100, de préférence de 2 à 8, de façon particulièrement préférée de 2 à 4, en particulier 2 ou 3 et
i représente un nombre entier, avec i = 1 à n.

**8.** Procédé selon la revendication 1, **caractérisé en ce qu'**on utilise comme polyisocyanates (a) le toluylène-diisocyanate, le diphénylméthane-diisocyanate ou des mélanges de diphénylméthane-diisocyanate et de polyméthylène-polyphénylène-polyisocyanates.

**9.** Mousses souples de polyuréthanne, pouvant être produites selon l'une quelconque des revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1108736 A
- EP 222453 A
- US 2003149232 A
- DE 2711002
- WO 2004096882 A
- WO 2004096883 A
- WO 2004020497 A
- US 2003143910 A
- US 2003191274 A
- EP 1359177 A
- EP 1291384 A
- DE 19618786
- EP 905180 A